# EUROPEAN PATENT SPECIFICATION

(11) **EP 4 305 814 B1**
(45) Date of publication and mention of the grant of the patent: **09.09.2026**
(21) Application number: 21933528.8
(22) Date of filing: 29.03.2021
(51) Int. Cl.: H04L 12/14, H04M 15/00, G06Q 20/02, H04W 4/24

(54) **METHOD, APPARATUS AND SYSTEM OF CHARGING MANAGEMENT**
VERFAHREN, VORRICHTUNG UND SYSTEM ZUR ABRECHNUNGSVERWALTUNG
PROCÉDÉ, APPAREIL ET SYSTÈME DE GESTION DE FACTURATION

(43) Date of publication of application: 17.01.2024
(73) Proprietor: Huawei Technologies Co., Ltd., Shenzhen, Guangdong 518129 (CN)
(72) Inventor: YING, Bidi, Shenzhen, Guangdong 518129 (CN); YANG, Chenchen, Shenzhen, Guangdong 518129 (CN); ZHANG, Hang, Kanata, Ontario 231 (CA)
(74) Representative: Isarpatent
(86) International application number: PCT/CN2021/083472
(87) International publication number: WO 2022/204841

(56) References cited:
- WO-A1-2019/020286
- WO-A1-2020/233771
- WO-A2-2010/045493
- CN-A- 112 422 300
- US-A1- 2010 065 629
- US-A1- 2018 077 023
- US-A1- 2019 394 655

## Description

### FIELD OF THE INVENTION

The present disclosure generally pertains to the field of communication networks, and the invention in particular relates to a charging method, an apparatus, a communication system of charging management, and a machine readable medium.

### BACKGROUND

In current networks, charging operations, including collection of charging-related data and calculations of charging bills may be performed by the same provider that deploys or controls the network functions. However, future networks may have multiple providers that may perform the charging operations, since providers may join a network and may share their resources with others. Having multiple providers, each performing charging operations may lead to untrusted bills (e.g., untrusted values for calculated bills) and untrusted ecosystems. Further, having multiple providers performing charging operations may pose risks to user data privacy, since multiple providers may have access to sensitive data for charging operations.

Therefore, there is a need for systems and methods on charging management in the future network that obviates or mitigates one or more limitations of the prior art as disclosed in the following documents.

This background information is provided to reveal information believed by the applicant to be of possible relevance to the present invention. No admission is necessarily intended, nor should be construed, that any of the preceding information constitutes prior art against the present invention.

US 2019/394655 A1 discloses methods and apparatuses for a service based architecture (SBA) for data analytics management (DAM). Configuration specifications are provided for configuring DAM entities for infrastructure management by infrastructure managers (InfMs), customer service managers (CSMs) for network slice subnet instance (NSSI), network slice instance (NSI) and service instance (SI) management, content and forwarding managers (CFM) for content and content cache management. Also provided are methods and apparatus for data analytics service provisioning regardless of DAM architecture.

WO 2020/221219 A1 discloses a communication method and a communication device. The communication method comprises a service communication proxy (SCP) receives a service request from a service consumer, the service request carrying a token, and the token comprising a service producer NF set identifier; and, the SCP transmits the service request to a selected service producer in a service producer NF set. The solution of the embodiments of the present application favors the solution of the problem of different producers in an NF set verifying a token and favors the implementation of convenient authorization in a set scenario in eSBA.

### SUMMARY

The object of the present invention is to provide a that obviate or mitigate one or more limitations of the prior art described above. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such. A method, apparatus and system are provided for a charging management in the future network. An aspect of the disclosure provides for a charging method. Such a method includes receiving, by a charging function from a requester on behalf of a provider, a charging request requesting for charging a service, wherein the service spans a plurality of network functions (NFs) operated by more than one providers including the provider which the requester is on behalf of, wherein the charging request includes an identifier (ID) of the requester, and wherein the more than one providers are untrusted by a consumer of the service. Such a method further includes sending, by the charging function to a DAM, a charging process request for a charging result according to the received information, the charging process request including the ID of the requester. Such a method further includes receiving, by the charging function from the DAM, the charging result indicating how to charge the service for the requester. Such a method further includes charging, by the charging function, the service for the requester according to the received charging result. Accordingly, such an aspect may provide for a charging solution that may be used in untrusted ecosystem including more than one providers.

In some embodiments, the charging request is received by the charging function from the requester via a trigger function configured as an interface enabling communications between requesters on behalf of the more than one providers and the charging function. In some embodiments the charging request further includes a security requirement on privacy protection associated with the service and a charging requirement indicating one or more of: a frequency to charge the service, an ID of the service, and a billing result indicating how the service is charged; wherein the charging request is received by the charging function from the requester via the trigger function in the following way. The trigger function receives a second charging request. The trigger function configures a multiple-provider charging model according to the charging requirement, wherein the multiple-provider charging model indicates how to charge the service across the one or more providers. The trigger function sends to the charging function, the charging request requesting for charging the service including the ID of the requester and the security requirement, and indicating the multiple-provider charging model. In some embodiments, the trigger function determines one or more charging events associated with the second charging request and the charging request sent by the triggering function to the charging function indicates the one or more charging events. Such embodiments may provide for an improved security and privacy protection during a charging process. Such embodiments may allow for a multiple-provider charging solution wherein one or more providers of a service may charge a consumer for their service.

In some embodiments, the charging request further includes: a trigger indication indicating to establish a charging chain; wherein before the charging request is received by the charging function from the requester via the trigger function, the method further includes: receiving, by the trigger function, the charging request. In some embodiments the method further includes sending, by the trigger function to a chain management function configured to manage charging chains associated with services, a charging chain establishment request including one or more of: the ID of the service and the trigger indication. In some embodiments the method further includes receiving, by the trigger function from the chain management function, a response indicating a charging chain, the charging chain being associated with a charging group including one or more group members which are consumers of the service. Such embodiments may further enhance trust and security during the charging process.

In some embodiments, the charging request further including: IDs of group members in a charging group associated with the charging chain. In some embodiments, the method further includes verifying, by the chain management function, the requester according to the charging chain establishment request. In some embodiments, the method further includes obtaining, by the chain management function, information on the charging group according to the charging chain establishment request.

In some embodiments the method further includes determining, by the chain management function, a charging chain for the requester according to the established charging group. Such embodiments may further provide for improved security by verifying the providers requesting for charging and determining a charging chain.

In some embodiments, the method further includes configuring, by the charging function according the security requirement, a charging mode option indicating a charging process, wherein the charging process request indicates the charging mode option. Such embodiments may enable for multiple-provider charging solution wherein one or more providers to charge a consumer for their services.

In some embodiments, the charging process request further includes a first account ID of a consumer of the service assigned by the provider which the requester is on behalf of, wherein the charging result includes the first account ID. In some embodiments the method further includes requesting, by the DAM, for information associated with the consumer of the service. In some embodiments the method further includes receiving, by the DAM, the information associated with the consumer of the service including one or more of: a charging profile associated with the service and traffic usage of the consumer of the service.

In some embodiments the step of requesting by the DAM, for information associated with the consumer of the service includes sending, by the DAM to an ID management function, a data collection request requesting for information associated with the consumer of the service and including the first account ID, wherein the ID management function is trusted by the consumer of the service. In such embodiments the method further includes mapping, by the ID management function, the first account ID with a second account ID of the consumer of the service assigned by a second provider among the more than one providers. In such embodiments the method further includes sending, by the ID management function to a first function, a charging profile request requesting for the charging profile associated with the service and including the second account ID, wherein the first function is operated by the second provider among the more than one providers. In such embodiments the method further includes receiving, by the ID management from the first function, a charging profile response indicating the charging profile. In such embodiments the method further includes sending, by the ID management to the DAM, the charging profile.

In some embodiments the method further includes mapping, by the ID management function, the first account ID with a third account ID of the consumer of the service assigned by a third provider among the more than one providers. In some embodiments the method further includes sending, by the ID management function to a second function, a traffic usage request requesting for information associated with the traffic usage of the consumer of the service and including the third account ID, wherein the second function is operated by the third provider among the more than one providers. In some embodiments the method further includes receiving, by the ID management from the second function, a traffic usage response including the information associated with traffic usage of the consumer of the service.

In some embodiments the method further includes generating, by the DAM, the charging result according to the information associated with the consumer of the service. In some embodiments the method further includes sending, by the DAM to the charging function, the generated charging result. Such embodiments may allow for a charging solution for a consumer of service that has different identifiers among different providers. Such embodiments may allow a trusted entity to collect charging related data.

In some embodiments, the charging process request further includes one or more of: a first account ID of a consumer of the service assigned by the provider which the requester is on behalf of, wherein the charging result includes the first account ID. In some embodiments, the method further includes requesting, by the DAM, for information associated with the consumer of the service. In some embodiments, the method further includes receiving, by the DAM, the information associated with the consumer of the service including a session ID associated with the consumer of the service and wherein the information indicates one or more of: an address of a storage storing a charging profile associated with the service, and an address of a storage of traffic usage of the consumer of the service.

In some embodiments, the session ID associated with the consumer of the service includes a first session ID and a second session ID. In some embodiments, step of requesting, by the DAM, for information associated with the consumer of the service includes sending, by the DAM to an ID management function, a data collection request requesting for the information associated with the consumer of the service and including the first account ID, wherein the ID management function is trusted by the consumer of the service. In such embodiments, the method further includes mapping, by the ID management function, the first account ID with a second account ID of the consumer of the service assigned by a second provider among the more than one providers. In some embodiments, the method further includes generating, by the ID management function, the first session ID associated with both the consumer of the service and the second account ID. In some embodiments, the method further includes sending, by the ID management function to a first function, a charging profile request requesting for the charging profile associated with the service and including the second account ID and the first session ID, wherein the first function is operated by the second provider among the more than one providers. In some embodiments, the method further includes receiving, by the ID management from the first function, a charging profile response indicating the address of the storage storing the charging profile associated with the service. In some embodiments, the method further includes sending, by the ID management to the DAM, the first session ID associated with the consumer of the service and the address of the storage storing the charging profile associated with the service.

In some embodiments, the method further includes mapping, by the ID management function, the first account ID with a third account ID of the consumer of the service assigned by the third provider among the more than one providers. In some embodiments, the method further includes generating, by the ID management, the second session ID associated with both the consumer of the service and the third account ID. In some embodiments, the method further includes sending, by the ID management function to the second function, a traffic usage request requesting for information associated with the traffic usage of the consumer of the service and including the third account ID and the second session ID. In some embodiments, the method further includes receiving, by the ID management from the second function, a traffic usage response. In some embodiments, the method further includes sending, by the ID management to the DAM, a data collection response including the second session ID associated with the consumer of the service and the address of the storage storing the traffic usage of the consumer of the service.

In some embodiments, the method further includes obtaining, by the DAM according to the received one or more addresses, information including one or more of: the charging profile associated with the service and the traffic usage of the consumer of the service. In some embodiments, the method further includes generating, by the DAM, the charging result according to the obtained information. In some embodiments, the method further includes sending, by the DAM to the charging function, the generated charging result. Such embodiments may allow for another charging solution for a consumer of service that has different identifiers among different providers. Such embodiments may allow a charging function to collect charging related data associated with a consumer directly from the different providers.

In some embodiments, the charging function further receives from the requestor a first account ID of a consumer of the service assigned by the provider which the requester is on behalf of, wherein the first account ID is an encrypted ID which is encrypted by the requester using a key of an ID management function. In some embodiments, the method further includes sending, by the charging function to the ID management function, an ID swapping request requesting for swapping the first account ID of the consumer of the service. In some embodiments, the method further includes receiving, by the charging function from the ID management function, an ID swapping response including one or more mappings between the first account ID and one or more IDs of the more than one providers. In some embodiments, the charging process request and the charging result further includes the received one or more mappings.

In some embodiments, the method further includes sending, by the DAM to the ID management function, a data collection request requesting for information associated with the consumer of the service and including a set of account IDs, wherein the ID management function is trusted by the consumer of the service. In some embodiments, the method further includes obtaining, by the ID management function, the one or more mappings by mapping the first account ID to the set of account IDs of the consumer of the service each assigned by one of the more than one providers. In some embodiments, the method further includes generating, by the ID management function, a set of session IDs associated with both the consumer of the service and the set of account IDs. In some embodiments, the method further includes obtaining, by the ID management function according to the set of session IDs, information on a charging profile associated with the service, the information on the charging profile indicating a set of addresses each pointing to a storage storing the charging profile associated with the service and the set of session IDs. In some embodiments, the method further includes sending, by the ID management function to the DAM, a response including one or more of: the set of account IDs, the set of session IDs, and the set of addresses.

In some embodiments, the method further includes obtaining, by the DAM according to the set of addresses, information including the charging profiles. In some embodiments, the method further includes obtaining, by the DAM, information associated with the traffic usage of the consumer of the service. In some embodiments, the method further includes generating, by the DAM, the charging result at least partially according to the obtained information. In some embodiments, the method further includes sending, by the DAM to the charging function, the generated charging result. Such embodiments may allow for another charging solution for a consumer of service that has different identifiers among different providers and among the same provider. Such embodiments may also allow a charging function to collect charging related data associated with a consumer directly from the different providers.

Other aspects of the disclosure provide for systems and apparatus (e.g., network elements) configured for implementing the network functions and for executing the methods described herein.

Other aspects of the disclosure provide for machine readable mediums comprising non-transient memory storing machine readable instructions which when executed by a processor implement the network function configured for executing the methods described herein.

Embodiments have been described above in conjunction with aspects of the present invention upon which they can be implemented. Those skilled in the art will appreciate that embodiments may be implemented in conjunction with the aspect with which they are described but may also be implemented with other embodiments of that aspect. When embodiments are mutually exclusive, or are incompatible with each other, it will be apparent to those skilled in the art. Some embodiments may be described in relation to one aspect, but may also be applicable to other aspects, as will be apparent to those of skill in the art.

### BRIEF DESCRIPTION OF THE FIGURES

Further features and advantages of the present invention will become apparent from the following detailed description, taken in combination with the appended drawings, in which:
FIG. 1 illustrates a charging architecture for a UE's subscription charge, according to an embodiment of the present disclosure.
FIG. 2 illustrates a multiple-level charging architecture, according to an embodiment of the present disclosure.
FIG. 3 illustrates a charging procedure according to an embodiment of the present disclosure.
FIG. 4 illustrates a call flow charging procedure, according to an embodiment of the present disclosure.
FIG. 5 illustrates a charging process based on global user equipment (UE) ID, according to an embodiment of the present disclosure.
FIG. 6 illustrates a charging process based on collecting charging related data via an ID management function, according to an embodiment of the present disclosure.
FIG. 7 illustrates a charging process based on collecting charging-related data by DAM, according to an embodiment of the present disclosure.
FIG. 8 illustrates a charging process based on ID swapping, according to an embodiment of the present disclosure.
FIG. 9A and 9B illustrate a flow chart of a charging procedure, according to an embodiment to the present disclosure.
FIG. 10 is a schematic diagram of a user equipment (UE) that may perform any or all of operations of the above methods and features explicitly or implicitly described herein, according to different embodiments of the present invention.

It will be noted that throughout the appended drawings, like features are identified by like reference numerals.

### DETAILED DESCRIPTION

Currently, 3GPP networks provide functions that implement offline or online charging mechanisms or both on domain (e.g., Evolved Packet Core (EPC)), subsystem (e.g., IP Multimedia Subsystem (IMS)) and service (e.g., Multimedia Messaging Service (MMS)) levels. To support these charging mechanisms, the network may perform real-time monitoring of resource usage on the said three levels in order to detect the relevant chargeable events. In offline charging, the resource usage may be reported from the network to the Billing Domain (BD) after the resource usage has occurred. In online charging, a subscriber's account may be queried prior to granting permission to use the requested network resource(s). Typical examples of network resource usage may include a voice call of certain duration, the transport of a certain volume of data, or the submission of a multimedia messaging (MM) of a certain size.

In future networks, multiple providers may join a network and may share their resources with others (e.g., infrastructure) or outsource their parts of network management activities. Currently, network functions are usually deployed or controlled by the same provider of the public land mobile network (PLMN). The provider is responsible for collecting charging data and charging bills. But future networks may be controlled by different or multiple providers. Having multiple providers collecting charging data and calculating charging bills may lead to untrusted values of bills and untrusted ecosystems.

Currently, as for roaming charging, the charging data collected from one or more of the home PLMN (HPLMN), interrogating PLMN, and visited PLMN (VPLMN) network elements may be used to determine the network utilization charges for the basic and supplementary services utilized by the home subscribers of the PLMN. However, charging data may be further processed by a network function that may be deployed or controlled by a third party due to existence of multiple providers (e.g., AI platforms, infrastructures, network managements, services or applications, security protection provider, etc.) in future networks. For example, resource usage may be done by multiple network functions (e.g., RAN, AI platform, router, slice controller, etc.). Each of the multiple network functions may obtain its rewards due to its contribution to the resource usage.

In future networks, temporary ID may be introduced to replace real ID and used for communications among different providers to protect ID privacy and avoid user tracking. To protect ID privacy, UE ID may be different in network functions. Use of temporary IDs may lead to a number of charging related issues as further described herein.

Charging related issues may include determining how to map temporary IDs during charging process, where temporary ID may be used to protect ID privacy.

For example, a UE may have different temporary IDs in different domains. The UE's resource usage in domain A may be associated with ID1, and the UE's resource usage in domain B may be associated with ID2. Given the UE's temporary ID's (e.g., ID1 and ID2), a charging related issue may be determining how the network may know that ID1 and ID2 are linked to the same UE. A further charging related issue may be determining who may be responsible for mapping temporary IDs in future networks. Given that future networks may involve untrusted network functions or providers, determining who may have access to, maintain or control over mapping relationships related to temporary IDs or accounts.

To address the indicated charging related issue, embodiments may provide a charging architectural approach which may offer a multiple-provider charging model for different providers and may provide one or more charging methods. Embodiments including charging architecture(s) described herein may provide for a change of providers' role and decoupling of the binding relationship between HPLMN and VPLMN. Embodiments including charging architecture(s) may be used in untrusted ecosystem(s) and provide ID privacy protection.

In current charging system(s), providers may obtain UE's sensitive information from collected data for charging. In future networks, which may include untrusted multiple providers, charging by providers (and having access to UE's sensitive information) may be undesirable and impractical. To address concerns over multiple charging entities having access to UE's sensitive information, embodiments may provide a charging architecture which may accommodate charging by multiple provider. Embodiments may further provide for a charging architecture which may be used in untrusted ecosystem and provide enhanced UE privacy.

Embodiments may provide for using blockchain to establish trust in untrusted charging ecosystems, which may include network functions operated by more than one different providers. Embodiments may further provide for using a third function to process charging operations (e.g., collecting usage and calculating bills) rather than permitting charging operations to be performed by the different providers. Embodiments may further provide for a charging architecture that may accommodate multiple-provider charging models. Embodiments may further provide for a charging architecture that may be used in untrusted ecosystems and provide enhanced ID privacy.

In current systems, charging services may be provided by a charging function that may request charging for NF service consumer(s). Charging services may include converged charging service (CCS), online charging service (OCS) or offline only charging service (OoCS). Responsibilities of the charging function may include generating charging data records (CDRs), receiving service usage reports from NF service consumers, and charging bills.

As discussed herein, current systems may have limitations since the charging function and NF service consumers may be deployed or controlled by the same provider or NF service consumers may trust the charging function. However, such limitations may be undesirable in untrusted ecosystems and may raise privacy concerns. For example, multiple providers may collect a UE's usage data and obtain sensitive information about UE when calculating UE charging. Charging may be further processed due to service requirements or security requirements (e.g., UE privacy anonymization). To address such limitations, embodiments may provide a charging architecture for UE's subscription charge. Embodiments may further provide a multiple-provider charging architecture, which may accommodate different providers. Embodiments may provide for enhanced charging operations by using a third function to perform or further process charging calculation. Embodiments may provide for enhanced charging operations by use of a logic function to trigger charging chain setup or to configure multiple-provider charging model as described herein.

Embodiments may provide for a multiple-provider charging architecture for different providers. Embodiments may further provide for establishing a trusted and secure charging ecosystem. Embodiments may further provide for enhanced ID privacy as further described herein.

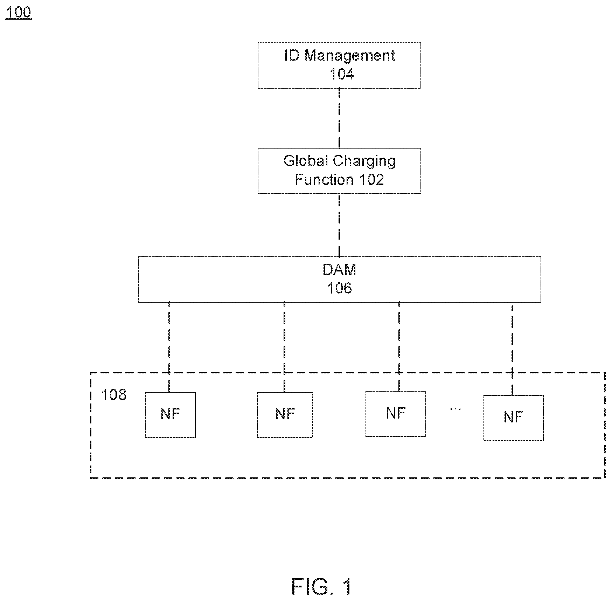

FIG. 1 illustrates a charging architecture for a UE's subscription charge, according to an embodiment of the present disclosure. Under charging architecture, multiple providers may join in a chain which may be controlled by a third party. Providers may be authenticated by the third party and providers' action may be audited publicly. According to Charging architecture 100. charging operations (e.g., collecting UE's resource usage, sharing UE's subscription, and calculating bills) may be performed by a third function (e.g., Data Analysis Management, DAM). Use of a third function to perform charging operations may prevent the one or more providers from obtaining UE's sensitive information from collected UE's resource usage. In addition, temporary IDs may be managed by a trust third party (e.g., ID management 104) which may further enhance ID privacy by limiting access to UE IDs, and thereby preventing a potential attacker from linking a temporary ID to a specific UE.

As discussed, charging architecture 100 may comprise a trust third party, ID management 104. ID Management 104, which may be deployed by a trust third party, may be responsible to keep or maintain temporary ID relationships. The ID management 104 may further be responsible to query or match temporary IDs with their specific UE (e.g., a temporary ID may be matched with a specific UE).

Charging architecture 100 may further comprise a global charging function 102, which may be connected to ID management 104. Global charging function 102 may be deployed by a provider. Global charging function 102 may configure parameters for CDRs (e.g., charging frequency, charging period, charging services (e.g., CCS, OCS)). Global charging function 102 may further generate and update CDRs.

Charging architecture100 may further comprise a DAM 106, which may be connected to the global charging functions 102 and one or more network functions (NFs) 108 operated or controlled by one or more providers as illustrated. DAM 106 may be deployed by a provider. DAM 106 may collect resource usage and subscriptions (e.g., charging policies). DAM 106 may further perform charging calculation and charging process (e.g., location anonymization). Charging architecture100 may further comprise one or more NFs 108 which may be deployed or controlled by one or more providers. The one or more NFs 108 may comprise network service provider or consumer. The one or more NFs 108 may include user plane functions (UPF) or policy control function (PCF). As may be appreciated by a person skilled in the art, the one or more NFs may be deployed or controlled by the same provider or different providers.

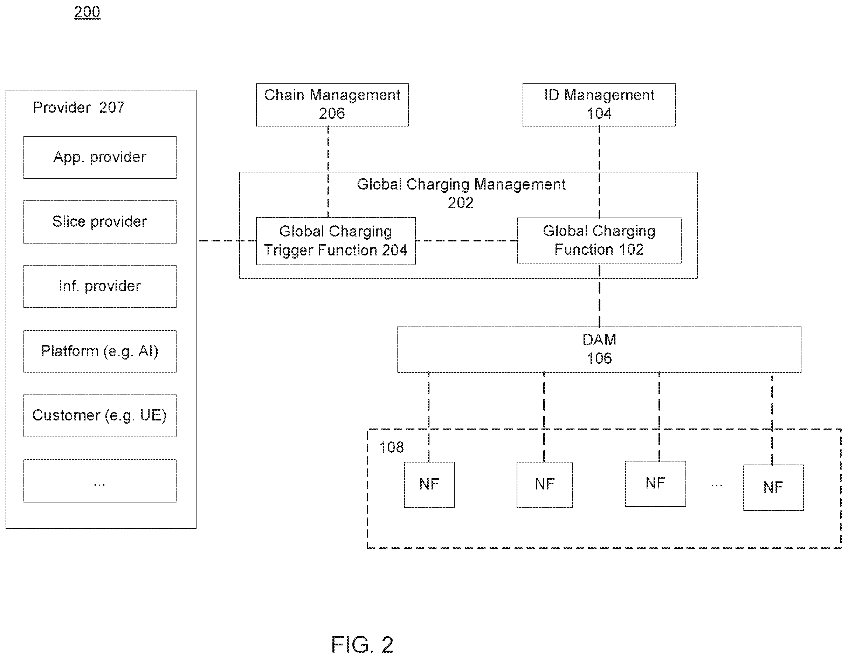

FIG. 2 illustrates a multiple-level charging architecture, according to an embodiment of the present disclosure. As illustrated, the multiple-level or multiple-provider charging architecture 200 may allow one or more providers represented by one or more requesters 208 to join in the network. The one or more requesters 208 may act on behalf of one or more of application provider, slice provider, infrastructure provider, platform provider (e.g., artificial intelligence (AI) platform provider), customers (e.g., UE), etc. The multiple-level charging architecture 200 may comprise a global charging management 2020. The global charging management 2020 may comprise one or more of a global charging function 102 and a global charging trigger function 204. The global charging management 202 may control the global charging trigger function 204 and the global Charging function 102. The global charging trigger function may be responsible for connecting the one or more requesters 208 (acting on behalf of the one or more providers) to chain management 206 and the Global Charging function 102. In some embodiments, the global trigger function may be configured as an interface enabling communications between requesters 208 on behalf of the more than one provider and the global charging function 102.

Functions in the network, e.g., DAM, charging function (e.g., global charging function 102), NFs (e.g., UPF), NFs (e.g., PCF), may be deployed or controlled by different providers. ID management 104 or Chain management 206 may be controlled by a trust third party or different trust third party.

The one or more requesters 208 may act on behalf of one or more of network service providers, network service providers or both. The chain management 206 may be deployed by a trust third party and may establish or set up different chains (e.g., ID chain, charging chain, etc.). The chain management 206 may be responsible for maintaining chain group members (e.g., manage joining or leaving a group). The chain management 206 may further authenticate and authorize providers. The chain management 206 may use blockchain to establish trust with the one or more providers represented by requesters 208. The chain management may be configured to manage charging chain associated with one or more services that span a plurality of network functions operated by more than one provider).

The global charging management 202 may be deployed by a provider and may control the global charging trigger function 204 and the global charging function 102. The global charging trigger function 204 may be deployed by the global charging management 202 and may setup or configure one or more multiple-provider charging model. Examples of multiple-provider charging model may include: app service charging model (e.g., app ID, time window, charging services (CCS, or OCS, or OoCS), ...), slice charging model (e.g., slice ID, time window, charging services (CCS, or OCS, or OoCS), ...), infrastructure charging model (e.g. infrastructure ID, time window, charging services (CCS, or OCS, or OoCS), ...), virtual network function charging model (e.g., virtual network function ID, time window, charging services (CCS, or OCS, or OoCS), ...), platform charging model (e.g., computing or storage platform ID, time window, charging services (CCS, or OCS, or OoCS), ...), UE charging model (e.g., UE ID, time window, charging services (CCS, or OCS, or OoCS), ...), communication service charging model (e.g., communication service ID, time window, charging services (CCS, or OCS, or OoCS), ...), computing service charging model (e.g., computing service ID, time window, charging services (CCS, or OCS, or OoCS), ...), privacy protection service charging model (e.g., Privacy protection service ID, time window, charging services (CCS, or OCS, or OoCS), ...), data access control service charging model (e.g., Database access control service ID, time window, charging services (CCS, or OCS, or OoCS), ...), data collection service charging model (e.g., Data collection service ID, time window, charging services (CCS, or OCS, or OoCS), ...), DAM service charging model (e.g., DAM service ID, time window, charging services (CCS, or OCS, or OoCS), ...), infrastructure management (InfM) service charging model (e.g., InfM service ID, time window, charging services (CCS, or OCS, or OoCS), ...), customer service management (CSM) service charging model (e.g., CSM service ID, time window, charging services (CCS, or OCS, or OoCS), ...), connection management (CM) service charging model (e.g., CM service ID, time window, charging services (CCS, or OCS, or OoCS), ...), content forwarding management (CFM) service charging model (e.g., CFM service ID, time window, charging services (CCS, or OCS, or OoCS), ...), etc. The global charging trigger function 204 may further be responsible for batch charging events based on the multiple-provider charging model. The global charging trigger function 204 may further be responsible for trigger charging chain establishment.

Embodiments may provide for an enhanced charging architecture for a UE's subscription charge and a multiple-provider charging architecture, which may accommodate different providers. The charging architecture 100 and multiple-provider charging architecture 200 may be used in untrusted ecosystem and may improve security and UE privacy protection.

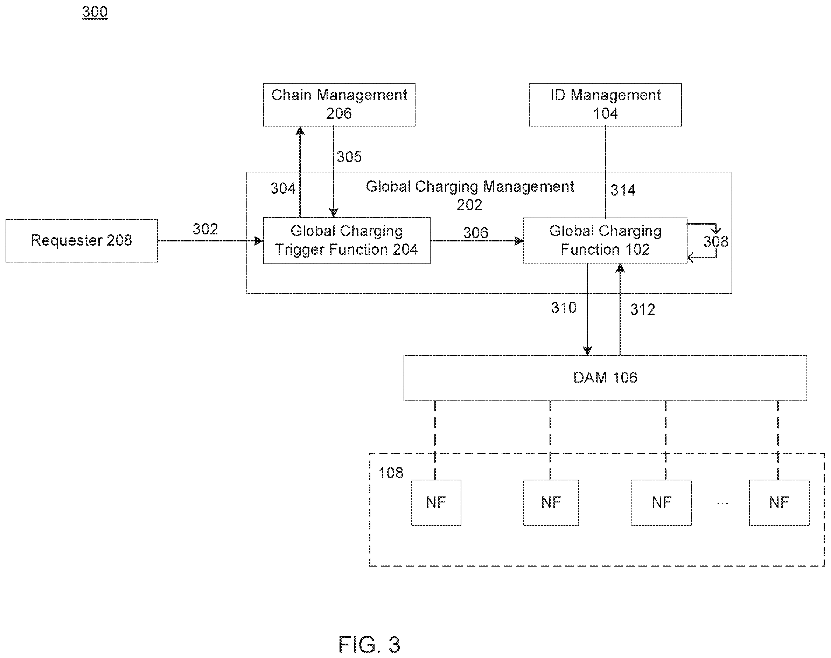

FIG. 3 illustrates a charging procedure according to an embodiment of the present disclosure. At 302, a requester 208, on behalf of a provider, may send a charging request message to the global charging trigger 204. The charging request may request for charging a service, wherein the service spans a plurality of network functions operated by more than one provider including the provider which the requestor is acting on behalf of. As may be appreciated by a person skilled in the art the more than one provider may be untrusted by a consumer of the service.

The charging request message may include one or more parameters, e.g., requester ID, a charging requirement, a trigger indication, and a security requirement on privacy protection associated with the service. The charging requirement may indicate one or more of charging frequency (e.g., a frequency to charge the service), an ID of the service, a billing result (e.g., indicating how the service is charged), charging services (e.g., CCS, or OCS), and bill notification mode (e.g., sending to the requester directly or the bill domain). Trigger indication may indicate the establishment of a charging chain for a charging group. The trigger indication may include e.g., requester's location, which may be used for identifying charging group members, or information about charging group members such as IDs of group members. The security requirement may indicate the privacy protection associated with the service (e.g., may have an indication information indicating what should be protected).

After receiving the charging request message, the global charging trigger function 204 may send, at 304, a charging chain establishment request message to chain management 206. The chain management 206 may be configured to manage charging chains associated with one or more services, including the service indicated in the charging request. The charging chain establishment request message may include one or more parameters, e.g., requester ID and trigger indication. The chain management 206 may verify the requester 208 according to the charging chain establishment request. The chain management 206 may obtain information on the charging group according to the charging chain establishment request. The chain management 206 may determine a charging chain for the requester 208 according to the established charging group. In some embodiments, the chain management 206 may setup a charging group and establish a charging chain if chain management 206 does not have a charging chain for the requester 208. In other embodiments, the chain management discovers an established charging chain based on existing charging chain (already established) for the requester 208. The chain management 206 may then send, at 305, a response (e.g., a charging chain establishment response) to the global charging trigger function 204. The response may indicate the charging chain (whether newly established or discovered), the charging chain being associated with a charging group including one or more group members which are consumers of the service.

In some embodiments the global charging trigger 204 may configure a multiple-provider charging model according to charging requirements, wherein the multiple-provider charging model may indicate how to charge the service across the one or more providers. The global charging trigger 204 may batch charging events or charging requests. Then, at 306, the global charging trigger 204 may send a charging notification message to the global charging function 102. The charging notification message may include one or more parameters, e.g., requester ID, multiple-provider charging model, security or privacy requirements, or batch charging event information (e.g., batch ID).

In some embodiments, the requester 208, on behalf of a provider, may send a charging request message to the global charging function 102. The charging request may request for charging a service, wherein the service spans a plurality of network functions operated by more than one provider including the provider which the requestor is acting on behalf of. The charging request message may comprise one or more of: e.g., requester ID, security or privacy requirements. As may be appreciated by a person skilled in the art the more than one provider may be untrusted by a consumer of the service. In some embodiments the global charging function102 may receive the charging request via the global trigger function 204, in which the global trigger function may be configured as an interface enabling communication between requesters 208 on behalf of the more than one provider and the global charging function 102.

At 308, the global charging function 102 may configure one or more parameters e.g., CDRs and charging profile (e.g., Immediate Event Charging (IEC), Event Charging with Unit Reservation (ECUR), or Post Event Charging (PEC) scenario, or location change report). The global charging function 102 may generate CDRs, requester ID, NF information (e.g., NF name, NF address, NF provider ID, etc.), charging services (e.g., OCS, CCS), time window, and charging mode option. Charging mode option may indicate a charging process that may be performed by DAM 106, according to security or privacy requirements, as described herein. In some embodiments, configuring a charging mode option may indicate a selection of the charging mode option among a set of charging mode options.

At 310, the global charging function 102 may send a charging process request message to the DAM 106. In some embodiments the charging process request is a request for charging results according to the received information (e.g., the charging request). The charging process request message may include one or more parameters, e.g., requester ID, CDR, charging profile, NF information (e.g., NF name, NF address, NF provider ID, etc.), charging services (e.g., OCS, CCS), time window, and charging mode option.

According to the received parameters, DAM 106 may collect one or more of resource usage, charging policy, charging profile or charging rule. DAM 106 may further process resource usage according the charging mode option (e.g., UE location anonymization).

DAM 106 may further calculate the charging results and then, at 312, may send the charging results to global charging function 102. The global charging function 102 receives the charging results indicating how to charge the service for the requester 208. The global charging function 102 may then charge the service for the requester 208 according to the received charging results.

The global charging function may, at 314, send an ID swapping request message to ID management 104 if the network cannot identify the specific UE from temporary IDs.

In some embodiments, the charging procedure 300 may include using blockchain to record or keep track of the charging operations performed in the procedure. Recording or keeping track of the charging operations may allow for checking and verification purposes.

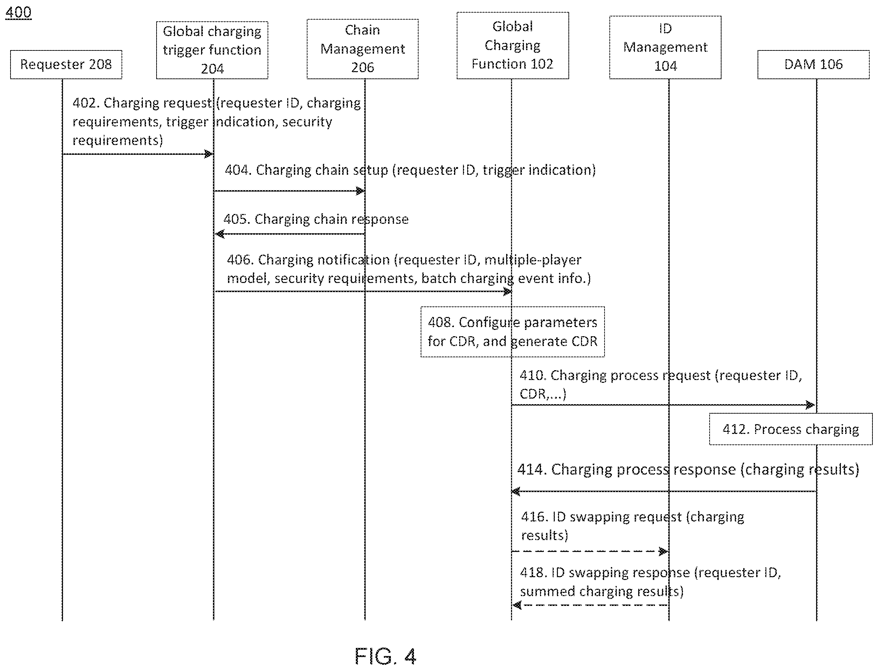

FIG. 4 illustrates a call flow charging procedure, according to an embodiment of the present disclosure. Charging procedure 400 may be similar to the charging procedure 300. Referring to FIG. 4, at 402, requester 208, on behalf of a provider, may send a charging request message to global charging trigger 204.

The charging request message may include one or more parameters, e.g., requester ID, a charging requirement, a trigger indication, and a security requirement on privacy protection associated with the service. Charging requirements may indicate one or more of charging frequency (e.g., a frequency to charge the service), an ID of the service, a billing result (e.g., indicating how the service is charged), charging services (e.g., CCS, or OCS), and bill notification mode (e.g., sending to the requester directly, or the bill domain). Trigger indication may indicate the establishment of a charging chain for a charging group. The trigger indication may include e.g., requester's location which may be used for identifying charging group members, or information about charging group members such as IDs of group members. Security requirements may indicate the privacy protection associated with the service (e.g., may have an indication information indicating what should be protected.

After receiving the charging request message, the global charging trigger function 204 may, at 404, send a charging chain setup or establishment request message to chain management 206. The charging chain setup message may include one or more parameters, e.g., requester ID and trigger indication. The chain management 206 may verify the requester 208. The chain management 206 may obtain information on the charging group according to the charging chain establishment request. The chain management 206 may determine a charging chain for the requester 208 according to the established charging group. In some embodiments, the chain management 206 may setup a charging group and establish a charging chain if chain management 206 does not have a charging chain for the requester 208. In other embodiments, the chain management discovers an established charging chain based on existing charging chain (already established) for the requester 208. The chain management 206 may then send, at 405, a response (e.g., a charging chain establishment response) to the global charging trigger function 204. The response may indicate the charging chain (whether newly established or discovered), the charging chain being associated with a charging group including one or more group members which are consumers of the service.

The global charging trigger 204 may configure a multiple-provider charging model according to charging requirements, wherein the multiple-provider charging model may indicate how to charge the service across the one or more providers. The global charging trigger 204 may batch charging events or charging requests. Then, at 406, the global charging trigger 204 may send a charging notification message to the global Charging function 102. The charging notification message may include one or more parameters, e.g., requester ID, multiple-provider charging model, security or privacy requirements, or batch charging event information (e.g., batch ID). The multiple-provider charging model may indicate one or more parameters, e.g., time window, and charging services (e.g., CCS, or OCS, or OoCS).

In some embodiments, the requester 208, on behalf of a provider, may send a charging request message to the global charging function 102. The charging request may request for charging a service, wherein the service spans a plurality of network functions operated by more than one provider including the provider which the requestor is acting on behalf of. As may be appreciated by a person skilled in the art the more than one provider may be untrusted by a consumer of the service. In some embodiments the global charging function102 may receive the charging request via the global trigger function 204, in which the global trigger function may be configured as an interface enabling communication between requesters 208 on behalf of the more than one provider and the global charging function 102.

At 408, the global charging function 102 may configure one or more parameters e.g., CDRs and charging profile (e.g., IEC, ECUR, or PEC scenario, or location change report). The global charging function 102 may generate CDRs, requester ID, NF information (e.g., NF name, NF address, NF provider ID, etc.), charging services (e.g., OCS, CCS), time window, and charging mode option. Charging mode option may indicate a charging process that may be performed by DAM 106, according to security or privacy requirements, as described herein. In some embodiments, configuring a charging mode option may indicate a selection of the charging mode option among a set of charging mode options.

At 410, the global charging function 102 may send a charging process request message to the DAM 106. In some embodiments the charging process request is a request for charging results according to the received information (e.g., the charging request). The charging process request message may include one or more parameters, e.g., requester ID, CDR, charging profile, provider ID, NF information (e.g., NF name, NF address, NF provider ID, etc.), charging services (e.g., OCS, CCS), time window, and charging mode option.

At 412, according to the received CDRs, DAM 106 may collect one or more of resource usage, charging policy, charging profile or charging rule. DAM 106 may further process resource usage according charging mode option (e.g., UE location anonymization). DAM 106 may further calculate the charging results, and then send, at 414, the charging results to global charging function 102.

The global charging function 102 may, at 416, send an ID swapping request message to ID management 104 if the network cannot identify the specific UE from temporary IDs. The ID swapping request message may include one or more parameters, e.g., requester ID, or requester ID together with charging results.

ID management 104 may sum all charging results according to ID mapping table, and, at 418 send the summed results to global charging function 418. In some embodiments, the charging procedure 400 may include using blockchain to record or keep track of the charging operations performed in the procedure. Recording or keeping track of the charging operations may allow for checking and verification purposes.

Embodiments described in procedures 300 and 400 may enable requesters, e.g., requesters 208, to charge for their services or for their payment for service consumers.

Requesters, such as network service providers (e.g., slice provider, platform provider, application provider, or infrastructure provider) should obtain their reward for their contribution to the resource usage of the network service consumer (e.g., UE, or other subscribers of the network service).

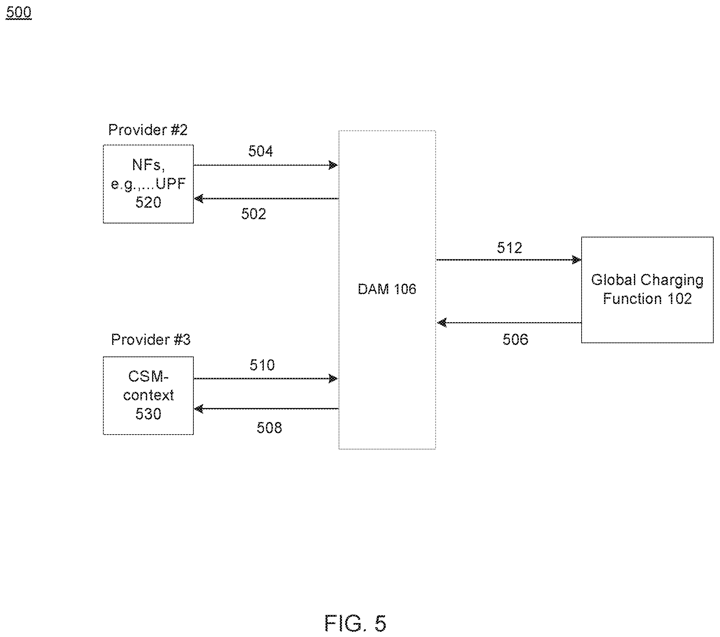

As described herein, the global charging function 102 may receive the charging notification message from the requester 208, e.g., a network service provider. The charging notification message may indicate the request of the network service provider (e.g., requester 208) for charging of the UE indicated in the request. When the UE is identified by a globally unified ID, the procedure for calculating charges related to the UE is described in reference to FIG. 5.

FIG. 5 illustrates a charging process based on global user equipment (UE) ID, according to an embodiment of the present disclosure. In FIG. 5, network functions may be deployed or controlled by the same provider or different providers. These providers may have different S-accounts for a specific UE, but these S-accounts may be mapped or linked to the globally unified UE ID, e.g., the different S-accounts may contain the same ID-seed. ID-seed may indicate a parameter or information about how to generate an S-account.

ID management 104, and also other different service providers may recognize the mapping between S-accounts and the globally unified UE ID. In an embodiment, the network function (e.g., UPF 520) provider may be provider #2, the CSM-context function provider may be provider #3. The CSM-context function 530 may store the context (e.g., the charging policy, or charging rule or charging profile) of the UE. DAM 106 may perform charging calculation(s) (e.g., calculate the amount of money to be paid by the customer to the service provider, calculate the total amount of traffic usage of the customer) based on the collected data (e.g., UE traffic usage, the charging policy, or charging rule or charging profile). As may be appreciated by a person skilled in the art, the network service consumer may be other requesters 208 other than UE.

At 502, the DAM function 106 may send a data collection request message to network functions (e.g., UPF) 520. The data collection request message may request the network functions (NFs) 520 to report UE traffic usage information. The data collection request message may include one or more parameters, e.g., log attribute ID (e.g., UE ID, slice ID, App. ID, service customer ID), log mode, report mode, log ID, information ID (e.g., latency, throughput, traffic usage).

The NFs 520 may log data based on the data collection request and, at 504, may send the logged data (e.g., UE traffic usage) to DAM function 106 based on the data collection request.

At 506, the global charging function 102 may send a charging process request message to DAM function 106. The charging process request message may be similar to the charging process request message at 310 and 410. The charging process request message may include one or more parameters, e.g., UE ID, CDR, UE location ID, NF ID, requester ID, time window, charging mode option. Based on the parameters, DAM function 106 may decide what data is to be collected, when the data is to be collected (e.g., a time window), and from where to collect the data.

At 508, DAM function 106 may send a charging profile request message to CSM-context function 530. The message may request to collect the UE charging profile or UE charging policy or UE charging rule. The message may include one or more parameters, e.g., log attribute ID (UE ID, slice ID, APP ID, etc.), log mode, log ID, information ID (e.g., e.g., latency, throughput, traffic usage).

At 510, CSM-context function 530 may send the charging policy, or charging rule or charging profile to DAM function 106 based on request message received at 508.

DAM function 106 may perform charging calculation based on received information from NFs 520, at 504, and from CSM-context function 530 at 510. DAM function 106 may, at 512, forward the charging results to global charging function 102. The charging results (e.g., the amount of money to be paid by the customer to the service provider (e.g., the requester 208), the total amount of traffic usage of the customer) may be calculated based on the collected data (e.g., UE traffic usage, charging policy, or charging rule or charging profile).

The global charging function 102 may sum all the different charging bills to a specific UE by mapping the different bills. The different charging bills may correspond to different temporary IDs, which may map to the same UE.

Embodiment illustrated in FIG. 5 may enable DAM 106 to calculate charging for a UE that may be identified by a globally unified ID among different providers.

The network service consumer (e.g., UE, or other subscribers of the network service) may be identified per network service provider (e.g., slice provider, platform provider, application provider, or infrastructure provider). The UE may have different IDs (e.g., S-account) in different service providers. In some embodiments, the UE may have different IDs within the same service providers. A person skilled in the art may appreciate that only trusted entities, e.g., ID management 106, may recognize the mapping between S-accounts and the globally unified UE ID.

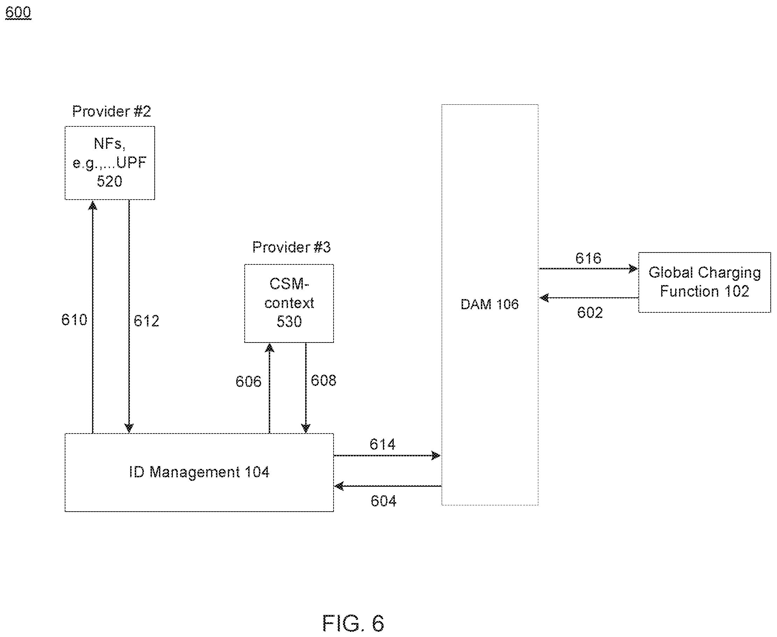

In an embodiment, illustrated in FIG. 6, the global charging function 102 may send a charging process request to DAM 106. The DAM 106 may send a request to ID management 104 for ID mapping to a specific UE. The ID management 104 may send a request for charging profile or charging policy or charging rule to CSM-context function 530. The ID management 104 may send a request for traffic usage to NFs (e.g., UPF) 520. The ID management 104 may then sends the received one or more of charging profile, charging policy, charging rule or traffic usage for the specific UE, to DAM 106, as further described herein.

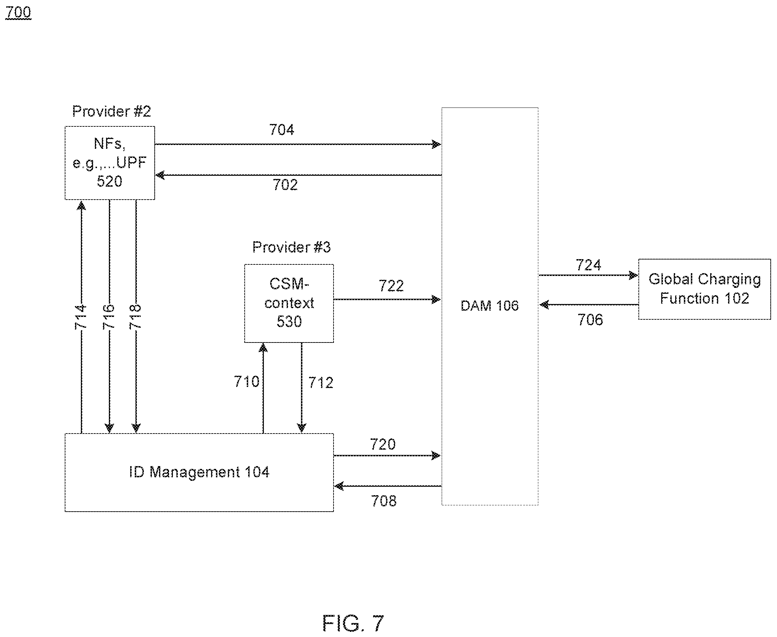

In another embodiment, illustrated in FIG. 7, the ID management 104 may send a request for indication about charging profile or charging policy or charging rule to CSM-context function 530. The ID management 104 may further send a request for indication about traffic usage to NFs (e.g., UPF) 520. The ID management 104 may then send a response message including requested indication for the specific UE, to DAM 106. The response message may indicate one or more addresses of database used for one or more of charging profile, charging policy, charging rule or traffic usage. The response message may further indicate a temporary session ID which indicates a specific UE during the charging process. The temporary session ID may indicate to DAM 106 the data to download for charging from the indicated databases, as further described herein.

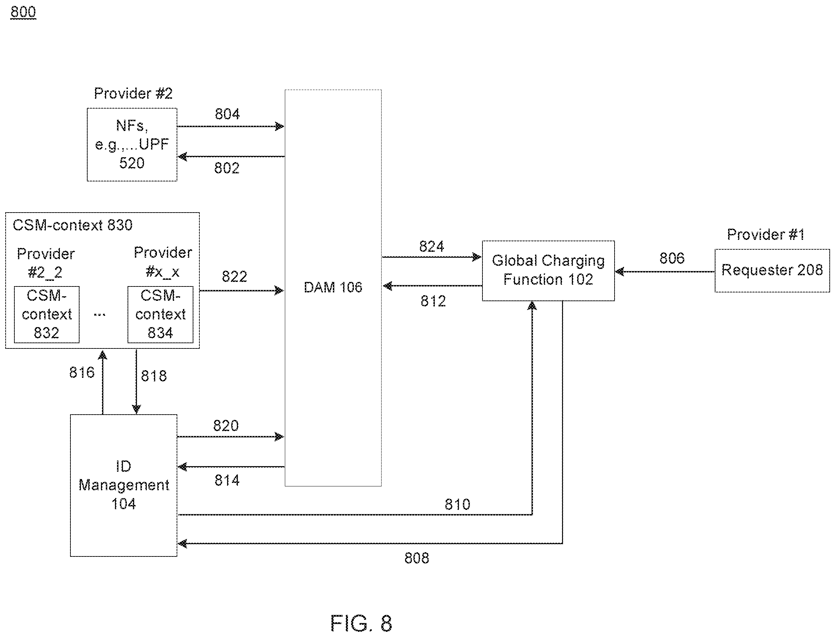

In another embodiment, illustrated in FIG. 8, after receiving the charging notification message, the global charging function 102 may send an ID swapping request message to ID management 104. The ID swapping request message may inform the ID management function 104 to perform ID swapping. After that, the global charging function 102 may send a charging process request to DAM 106. The DAM 106 may send a request for one or more of charging profile, charging policy or charging rule for a specific UE to process charging as further described herein.

FIG. 6 illustrates a charging process based on collecting charging related data via an ID management function, according to an embodiment of the present disclosure.

Before starting with the process 600, information about traffic usage may be delivered to DAM 106 periodically. For example, DAM function 106 may send a data collection request message to network functions (e.g., UPF) 520. The data collection request message may include one or more parameters, e.g., log attribute ID (e.g., UE ID, slice ID, App. ID, etc.), log mode, report mode, log ID, information ID (e.g., latency, throughput, traffic usage). NFs 520 may send the logged data (e.g., UE traffic usage) to DAM function 106. In some embodiments, the provider ID (e.g., ID of the provider #2) who deploys or controls NFs 520 may be sent to DAM function 106 together with the logged data.

Referring to FIG. 6, at 602, the global charging function 102 may send a charging process request message to DAM function 106. The charging process request message may be similar to the charging process request message at 310 and 410. The charging process request message may include one or more parameters, e.g., a first account ID (e.g., S-account #1) of a consumer of the service (e.g., a UE) assigned by the provider (e.g., provider #1) which the requester is acting on behalf of. The S-account #1 which may be used for identifying a specific UE by the provider #1). The charging request may further include UE location ID, NF ID, requester ID, time window, charging mode option.

In some embodiments, the DAM 106 may request for information associated with the consumer of the service. In some embodiments, the DAM 106 may receive the information associated with the consumer of the service comprising one or more of: a charging profile associated with the service and traffic usage of the consumer of the service.

At 604, DAM function 106 may send a data collection request message to ID management function 104. The data collection request message may request for information associated with the consumer of the service. The data collection request message may include one or more parameters, e.g., log attribute ID (first account ID (e.g., S-account #1), slice ID, App. ID, etc.), log mode, report mode, log ID, information ID (e.g., collecting traffic usage or collecting charging policy). As may be appreciated by a person skilled in the art, the ID management function 104 may be trusted by the consumer of the service (e.g., UE).

The ID management function 104 may map the first account ID (e.g., S-account #1) to or with a second account ID (e.g., S-account #3) of the consumer of the service (e.g., UE). The second account (e.g., S-account #3) may be used for identifying a specific UE (consumer of the service) by the provider #3 (which may deploy the CSM-context function 530). The second account ID (e.g., S-account #3) may be assigned by the provider #3 to the consumer of the service (e.g., UE). As may be appreciated by a person skilled in the art, provider #3 may be one of the one or more providers of the service.

The ID management function 104 may then send, at 606, a charging profile request message requesting for the charging profile associated with the service to a first function (e.g., CSM-context function 530) which may be deployed or controlled by the provider #3. The charging profile request message may include the second account ID (e.g., S-account #3).

CSM-context function 530 may send, at 608, a charging profile response message, based on S-account#3 to ID management function 104. The charging profile response message may be associated with the service and indicate a charging profile, charging policy or charging rule. As may be appreciated by a person skilled in the art, the charging profile may be referred to as the charging policy or the charging rule.

The ID management function 104 may then map the first account ID (e.g., S-account #1) to a third account ID (e.g., S-account #2) of the consumer of the service (e.g., UE). The third account ID (e.g., S-account #2) may be used for identifying a specific UE (consumer of the service) by the provider #2 (which may deploy NFs e.g., UPF 520). The third account ID (e.g., S-account #2) may be assigned by the provider #2 to the consumer of the service (e.g., UE). As may be appreciated by a person skilled in the art, provider #2 may be one of the one or more providers of the service.

The ID management function 104 may then send, at 610, a traffic usage request message requesting for information associated with the traffic usage of the consumer of the service (e.g., UE) to a second function (e.g., NFs (e.g., UPF) 520), which may be deployed or controlled by the provider #2. The traffic usage request message may include one or more parameters, e.g., third account ID (e.g., S-account #2), log mode, report mode, and log ID, and time window.

The NFs (e.g., UPF) 520 may log UE's traffic usage and may send, at 612, a traffic usage response message which includes logged traffic usage and S-account #2 to ID management function 104.

The ID management function may send, at 614, a data collection response message to DAM function 106. The data collection response message may comprise the information associated with the traffic usage of the consumer of the service (e.g., UE). The data collection response may include one or more parameters, e.g., UE traffic usage collected from NFs (e.g., UPF) 520, UE charging profile, charging policy or charging rule collected from CSM-context function 530, and UE ID S-account #1.

The DAM function 106 may generate (e.g., perform charging calculation(s)) the charging results according to the received information. The DAM function 106 may forward, at 616, the generated charging results, including the first account ID (e.g., S-account #1) to global charging function 102. The charging results (e.g., the amount of money to be paid by the consumer of the service provider by the service provider (e.g., provider #1), the total amount of traffic usage of the customer) may then be calculated.

FIG. 7 illustrates a charging process based on collecting charging-related data by DAM, according to an embodiment of the present disclosure. At 702, DAM function 106 may send a data collection request message to network functions (e.g., UPF). The data collection request message may request the network functions (NFs) e.g., UPF 520 to report UE traffic usage information. The data collection request message may include one or more parameters, e.g., log attribute ID (e.g., ID of the consumer of the service (e.g., UE ID), slice ID, App. ID), log mode, report mode, log ID, and information ID (e.g., latency, throughput, traffic usage).

NFs 520 may send, at 704, a data collection response message to DAM function 106. The data collection response message may include one or more parameters, e.g., logged data (e.g., UE traffic usage), Temporary session ID which indicates a specific UE in the NFs 520 during a period, e.g., Session #0 (e.g., the UE IP address), provider ID (e.g., provider ID #2) who deploys or controls the NFs 520.

At 706, the global charging function 102 may send a charging process request message to DAM function. The charging process request message may be similar to the charging process request message at 310 and 410. The charging process request message may include one or more parameters, e.g., a first account ID (e.g., S-account #1) of a consumer of the service (e.g., a UE) assigned by the provider (e.g., provider #1) which the requester is acting on behalf of. The S-account #1 which may be used for identifying a specific UE by the provider #1). The charging request may further include UE location ID, NF ID, requester ID, time window, and charging mode option.

In some embodiments, the DAM 106 may request for information associated with the consumer of the service (e.g., UE). In some embodiments, the DAM 106 may receive the information associated with the consumer of the service comprising a session ID associated with the consumer of the service (e.g., UE) and indicating one or more of: an address of a storage storing a charging profile associated with the service, and an address of a storage of traffic usage of the consumer of the service. In some embodiments, the session ID associated with the consumer of the service includes a first session ID and a second session ID.

DAM function 106 may send, at 708, a data collection request message to ID management function 104 requesting for information associated with the consumer of the service. The data collection request message may include one or more parameters, e.g., log attribute ID (first account ID (e.g., S-account #1), slice ID, App. ID), log mode, report mode, log ID, and information ID (e.g., collecting traffic usage). As may be appreciated by a person skilled in the art, the ID management function 104 may be trusted by the consumer of the service (e.g., UE).

ID management function 104 may map the first account ID (e.g., S-account #1) to or with a second account ID (e.g., S-account #3) of the consumer of the service (e.g., UE). The second account ID (e.g., S-account #3) may be used for identifying the specific UE (consumer of the service) by provider #3 (which may deploy or control CSM-context function 530). The second account ID (e.g., S-account #3) may be assigned by the provider #3 to the consumer of the service (e.g., UE). As may be appreciated by a person skilled in the art, provider #3 may be one of the one or more providers of the service.

ID management 104 may generate a first session ID (e.g., Session ID #3) which may be associated with both the consumer of the service (e.g., UE) and the second account ID (e.g., S-account #3). In some embodiments the first session ID may be a temporary session ID which may indicate the specific UE and keep a binding relationship between second account ID (e.g., S-account #3) and the first session ID (e.g., Session ID #3).

Then, ID management 104 may send, at 710, a charging profile request message to a first function (e.g., CSM-context function 530). The charging profile request message may request for the charging profile associated with the service. The first function (e.g., CSM-context function 530) may be deployed or controlled by the provider #3. The charging profile request message may include one or more parameters, e.g., second account ID (e.g., S-account #3) and the first session ID (e.g., Session ID#3).

Then the first function (e.g., CSM-context function) 530 may send, at 712, a charging profile response to ID management 104. The charging profile response may indicate an address of a storage storing the charging profile associated with the address (e.g., charging profile database address #3 (e.g., IP address) where charging profile or charging policy or charging rule may be stored). In some embodiments, the ID management function 104 may send to the DAM 106, the first session ID (e.g., Session ID#3) associated with the consumer of the service and the address of the storage storing the charging profile associated with the service.

ID management function 107 may maps the first account ID (e.g., S-account #1) to or with a third account ID (e.g., S-account #2) of the consumer of the service (e.g., UE). The third account ID (e.g., S-account #2) may be used for identifying the specific UE (consumer of the service) by provider #2 (which may deploy a second function (e.g., NFs (e.g., UPF) 520)). The third account ID (e.g., S-account #2) may be assigned by the provider #2 to the consumer of the service (e.g., UE). As may be appreciated by a person skilled in the art, provider #2 may be one of the one or more providers of the service.

ID management 104 may generate a second session ID (e.g., Session ID #2) which may be associated with both the consumer of the service (e.g.,) and the third account ID (e.g., S-account #2). In some embodiments the second session ID may be a temporary session ID which may indicate the specific UE and keep a binding relationship between third account ID (S-account #2) and the second session ID (Session ID #2).

Then, ID management 104, may send, at 714, a traffic usage request message to a second function (e.g., NFs (e.g., UPF) 520). The traffic usage request message may request for information associated with the traffic usage of the consumer of the service (e.g., UE). The traffic usage request message may include one or more parameters, e.g., third account ID (e.g., S-account #2), the second session ID (e.g., Session ID #2), log mode, report mode, and log ID, and time window.

The second function (e.g., NFs (e.g., UPF) 520) may send to the ID management 104 a traffic usage response. In some embodiments, if the logged data (e.g., UE traffic usage) of the UE identified by S-account #2 has been reported in 704, NFs (e.g., UPF) may sends, at 716 Session ID #0, #2, and provider #2 ID to ID management function 104. Otherwise, NFs may send, at 718, traffic usage response message to ID management 104. Traffic usage response message may indicate address of a storage storing the traffic usage of the consumer of the service (e.g., log database address #2 (e.g., IP address) where logged data or traffic usage may be stored).

ID management function 104 may send, at 720, a data collection response to DAM 106. The data collection response may include one or more parameters, e.g., the first account ID (S-account #1), the first session ID (e.g., Session ID #3), charging profile database address #3, the second session ID (Session ID #2), and address of a storage storing the traffic usage of the consumer of the service (e.g., log database address #2). If the logged data (e.g., UE traffic usage) has been reported in 704, the data collection response may include one or more parameters, e.g., S-account #1, Session ID #3, charging profile database address #3, Session ID #0, and provider ID #2.

DAM 106 may obtain, according to the received one or more addresses, information comprising one or more of: the charging profile associated with the service and the traffic usage of the consumer of the service. In an embodiment, the DAM 106 may obtain (e.g., download), at 722, charging profile or charging policy or charging rule from the charging profile database for the specific UE (consumer of the service) using Session ID #3. DAM 106 may download logs or traffic usage from the log database for the specific UE with Session ID #2.

The DAM function 106 may then generate (e.g., perform charging calculation(s)) the charging results according to the obtained information. The DAM function 106 may forward, at 724, the generated charging results to global Charging function 102.

FIG. 8 illustrates a charging process based on ID swapping, according to an embodiment of the present disclosure. Referring to charging process 800, the DAM function 106 may send, at 802, a data collection request message to network functions (e.g., UPF) 520. The data collection request message may include one or more parameters, e.g., log attribute ID (e.g., ID of the consumer of the service (e.g., UE ID), slice ID, App. ID), log mode, report mode, log ID, and information ID (e.g., latency, throughput, traffic usage).

NFs 520 may log data and send, at 804, the logged data (e.g., UE traffic usage) to DAM function 106. The logged data may include UE ID (e.g., S-account#2) which may be used in the NFs 520 deployed or controlled by the provider #2.

At 806, the requester 208, on behalf of a provider (e.g., provider #1), may send a charging request message to global charging function 102. The charging request message may include one or more parameters, e.g., an ID of the requester (e.g., an encrypted first account ID such as S-account #1 which identifies a specific UE by the provider #1), charging requirements, security requirements The first account ID (e.g., S-account #1) of a consumer of the service (e.g., UE) may be assigned by the provider (e.g., provider #1) for which the requester 208 is acting on behalf. It should be appreciated that the first account ID (e.g., S-account #1) may be encrypted by the requester 208 using a key (e.g., a public key) of the ID management 104, and thus cannot be observed by global Charging function 102. The global charging function 102 may then configure a multiple-provider charging model and may select a charging mode option.

The global charging function 102 may send, at 808, an ID swapping request message to ID management function 104. The ID swapping request message may request for swapping the first account ID (e.g., S-account #1) of the consumer of the service. The ID swapping request message may include one or more parameters, e.g., encrypted first account ID (e.g., S-account #1 may be encrypted using the public key of ID management) and multiple-provider charging model.

Then ID management function 104 may send, at 810, an ID swapping response comprising one or more mappings between the first account ID (e.g., S-account #1) and one or more IDs of the more than one provider. In an embodiment, the ID swapping response may include a set of account IDs of the consumer of the service (e.g., S-account #2, ..., S-account #x) identifying the consumer of the service (e.g., specific UE) (associated with S-account#1) during the time window. The ID response message may further include the one or more corresponding provider IDs (e.g., provider #2, ..., provider #x) who assign the account IDs (e.g., S-account) to the consumer of the service (e.g., specific UE). As may be appreciated by a person skilled in the art, account IDs comprising S-account #2, ..., S-account #x may be the IDs of the consumer of the service (e.g., UE) at different user plane NF instances (e.g., different UPFs) deployed or controlled or provided by provider #2, ..., provider #x. It should be further appreciated that UPFs may include the UPF deployed or controlled or provided by provider #2. ID management 104 may have pre-knowledge that it may only need to map the first account ID (S-account #1) to the set of account IDs of the consumer of the service (e.g., S-account #2, ..., S-Account #x) at different user plane NF instances during the time window.

The global charging function may the send, at 812, a charging process request message to DAM function 106. The charging process request message may include one or more parameters, e.g., receiving mappings (e.g., the set of account IDs (e.g., S-account #2, ..., S-account #x)), UE location ID, NF ID, requester ID, time window, and charging mode option.

DAM function 106 may send, at 814, a data collection request message to ID management function 104. The data collection request message may request for information associated with the consumer of the service. The data collection request message may include one or more parameters, e.g., log attribute ID (e.g., the set of account ID's (e.g., S-account #2, ..., S-account #x), slice ID, App. ID), log mode, report mode, log ID, and information ID (e.g., traffic usage, charging policy). As may be appreciated by a person skilled in the art, the ID management function 104 may be trusted by the consumer of the service (e.g., UE).

In an embodiment, ID management function 104 may obtain one or more mappings by mapping the first account ID (e.g., S-account #1) to the set of account IDs of the consumer of the service each assigned by one of the more than one providers. The ID management function 104 may generate a set of session IDs associated with both the consumer of the service and the set of account IDs. The ID management function 104 may obtain according to the set of session IDs, information on a charging profile associated with the service, the information on the charging profile indicating a set of addresses each pointing to a storage storing the charging profile associated with the service and the set of session IDs. The ID management 104 may send to the DAM 106, a response comprising one or more of: the set of account IDs, the set of session IDs, and the set of addresses.

In another embodiment, ID management function 104 may map the set of account IDs to another set of account IDs of the consumer of the service assigned by the more than providers. For example, ID management function 104 may map S-account #2 to S-account #2_2 (which may be used to identify a specific UE in a CSM-context), ..., S-account #x to S-account #x_x (which may be used to identify a specific UE in another CSM-context). ID management function 104 may generate a set of session IDs (e.g., session ID #2_2... session ID #x_x) associated with the consumer of the service (e.g., UE) and the another set of account IDs (e.g., S-account #2_2, ..., S-account #x_x).

ID management function 104 may then send, at 816, one or more charging profile request messages to a set of CSM-context functions 830 (e.g., CSM-context function 832 deployed or controlled by provider #2_2, ... and the CSM-context function 834 deployed or controlled by provider #x_x). The one or more charging policy request messages may include one or more parameters, e.g., the another set of account IDs and the set of session IDs (e.g., S-account #2_2, session ID #2_2 which may be generated by ID management 104 and temporary assigned to a UE) ..., (S-account #x_x, session ID #x_x, which may also be generated by ID management 104 and temporary assigned to the UE). The one or more charging profile request messages may further include one or more of log mode, report mode, and log ID.

The set of CSM-context functions 830 may send, at 818, a set of charging profile responses to ID management 104. The set of charging profile responses may comprise a set of charging profile database address (e.g., charging profile address #2_2, ..., (database address #x_x)) wherein each charging profile address may correspond to a respective CSM-context function from the set of CSM-context functions 830. The set of charging profile responses may further include the corresponding set of session IDs (e.g., session ID#2_2, ..., session ID#x_x). In other embodiments, charging profiles may be stored into a central database, and the CSM-context functions 830 may send a charging profile response to ID management 104, in which the charging profile response may comprise one or more of a charging profile database address (of the central database) together with the corresponding set of session IDs (e.g., session ID#2_2, ..., session ID #x_x) to ID management 104.

ID management function 104 may send, at 820, a data collection response to DAM 106. The data collection response may comprise one or more of: the another set of account IDs, a corresponding set of session IDs, and corresponding set of databases address (e.g., S-account #2_2, session ID #2_2, database address #2_2), ..., (S-account #x_x, session ID #x_x, database address #x_x).

DAM 106 may obtain, according to the received set of addresses, information including the charging profiles. In an embodiment, DAM function 106 may download, at 822, one or more of charging profiles or charging policy or charging rule from the set of charging profile databases indicated by the set of database addresses. DAM function 106 may further obtain information associated with the traffic usage of the consumer of the service.

It should be appreciated that logged data (e.g., UE traffic usage) may be reported, by the different user plane NFs (e.g., UPF) 520 to DAM function 106, at 804. If the logged data (e.g., UE traffic usage) has not been reported, DAM 106 and NFs 520 may perform the operations at 802 and 804.

The DAM 106 may then generate (e.g., perform charging calculation(s)) the charging results at least partially according to the obtained information. The DAM function 106 may then forward, at 824, the generated charging results to global charging function 102.

As described, embodiments may provide for DAM performing charging calculations when UE has different IDs among different providers. Embodiments may for further provide for DAM performing charging calculations when UE has different IDs within the same provider.

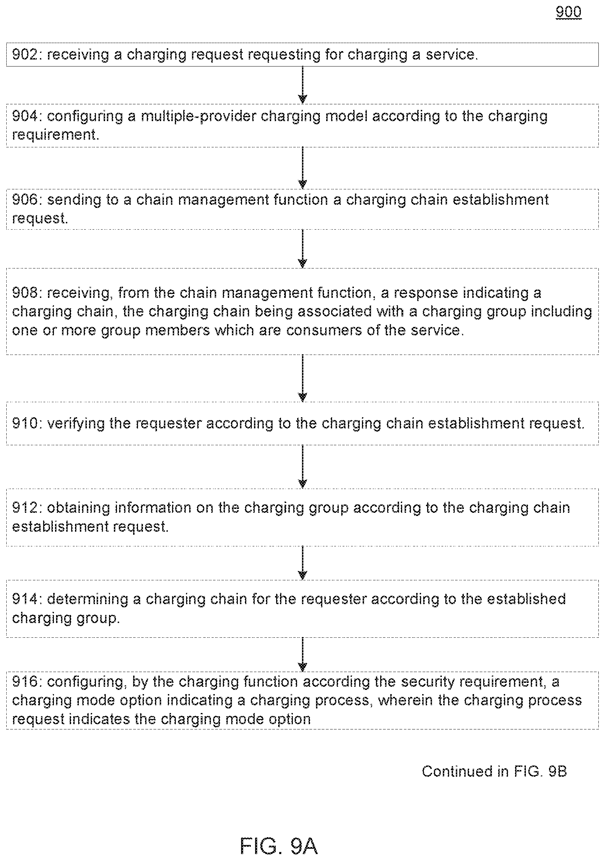

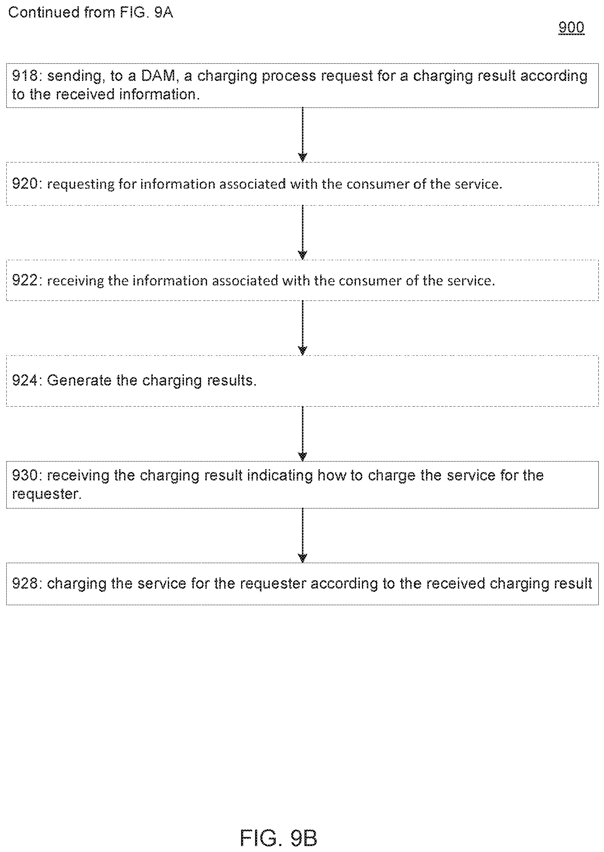

FIG. 9A and 9B illustrate a flow chart of a charging procedure, according to an embodiment to the present disclosure. In an embodiment, the procedure may be performed by the global charging function 102.

The procedure 900 may include, at 902, receiving a charging request requesting for charging a service. In some embodiments the charging function may receive, from a requester on behalf of a provider, a charging request requesting for charging a service. In some embodiments, the service spans a plurality of network functions (NFs) operated by more than one providers including the provider which the requester is on behalf of. In some embodiments, the charging request comprises an identifier (ID) of the requester, the more than one providers are untrusted by a consumer of the service.

In some embodiments, the charging request may be received by the charging function from the requester via a trigger function. The trigger function may be configured as an interface enabling communications between requesters on behalf of the more than one providers and the charging function.

In some embodiments, the charging request further includes a security requirement on privacy protection associated with the service and a charging requirement indicating one or more of: a frequency to charge the service, an ID of the service, and a billing result indicating how the service is charged.

In some embodiments, the charging request may be received by the charging function from the requester via the trigger function in the following way. As mentioned, the trigger function may receive from the requester a second charging request. In some embodiments, at 904, the trigger function may configure a multiple-provider charging model according to the charging requirement, wherein the multiple-provider charging model indicates how to charge the service across the one or more providers. In some embodiments, the trigger function may send to the charging function, the charging request requesting for charging the service comprising the ID of the requester and the security requirement, and indicating the multiple-provider charging model.

In some embodiments, the trigger function may determine one or more charging events associated with the second charging request and the charging request sent by the triggering function to the charging function indicates the one or more charging events.

In some embodiments, the charging request may further include a trigger indication indicating to establish a charging chain. In some embodiments before the charging request is received by the charging function from the requester via the trigger function, the trigger function may perform the following operations. The trigger function may receive the charging request. The trigger function, may at 906, send to a chain management configured to manage charging chains associated with services, a charging chain establishment request comprising one or more of: the ID of the service and the trigger indication. The trigger function may receive, at 908, from the chain management function, a response indicating a charging chain, the charging chain being associated with a charging group including one or more group members which are consumers of the service

In some embodiments, the charging request further comprising: IDs of group members in a charging group associated with the charging chain. In some embodiments, at 910, the chain management function, may verify the requester according to the charging chain establishment request. The chain management function, may, at 912, obtain information on the charging group according to the charging chain establishment request. The chain management function, may, at 914, determine a charging chain for the requester according to the established charging group.

In some embodiments, at 916, the charging function may configure according the security requirement, a charging mode option indicating a charging process, wherein the charging process request indicates the charging mode option.

In some embodiments, the charging process request further comprises a first account ID of a consumer of the service assigned by the provider which the requester is on behalf of, wherein the charging result includes the first account ID. In some embodiments, the charging process request comprises one or more of: a first account ID of a consumer of the service assigned by the provider which the requester is on behalf of, wherein the charging result includes the first account ID.

Referring to FIG. 9B, at 918, the charging function may send to the DAM, a charging process request for a charging result according to the received information, the charging process request comprising the ID of the requester.

In some embodiments, the DAM at 920 may request for information associated with the consumer of the service. In some embodiments the DAM, at 922 may receive, by the DAM, the information associated with the consumer of the service. In some embodiments the information received may include one or more of: a charging profile associated with the service and traffic usage of the consumer of the service. In some embodiments, the information received may include a session ID associated with the consumer of the service and wherein the information indicates one or more of: an address of a storage storing a charging profile associated with the service, and an address of a storage of traffic usage of the consumer of the service. In some embodiments the session ID associated with the consumer of the service includes a first session ID and a second session ID.

In some embodiments, the charging function may further receive from the requestor a first account ID of a consumer of the service assigned by the provider which the requester is on behalf of, wherein the first account ID is an encrypted ID which is encrypted by the requester using a key of an ID management function. In some embodiments, the charging function may send to the ID management, an ID swapping request requesting for swapping the first account ID of the consumer of the service. In some embodiments the charging function may receive form the ID management function an ID swapping response comprising one or more mappings between the first account ID and one or more IDs of the more than one providers. In some embodiments the charging process request includes the received one or more mappings.

In some embodiments, the step of requesting by the DAM, for information associated with the consumer of the service may include the DAM sending to the ID management function a data collection request requesting for the information associated with the consumer of the service. In some embodiments the data collection request comprises the first account ID, wherein the ID management function is trusted by the consumer of the service. In some embodiments the data collection request comprises a set of account IDs, wherein the ID management function is trusted by the consumer of the service.

In some embodiments, the ID management function may map the first account ID with a second account ID of the consumer of the service assigned by a second provider among the more than one providers. In some embodiments, the ID management function sends to a first function a charging profile request requesting for the charging profile associated with the service. In some embodiments the charging profile request comprises the second account ID, wherein the first function is operated by the second provider among the more than one providers. In some embodiments the charging profile request comprises the second account ID and the first session ID. In some embodiments the ID management function may receive from the first function a charging profile response. In some embodiments, the charging profile response indicates the charging profile. In some embodiments the charging profile response indicates the address of the storage storing the charging profile associated with the service. In some embodiments, the ID management may send to the DAM the charging profile.

In some embodiments, the ID management may generate the first session ID associated with both the consumer of the service and the second account ID. In some embodiments, the ID management may send to the DAM, the first session ID associated with the consumer of the service and the address of the storage storing the charging profile associated with the service.

In some embodiments the ID management function may obtain one or more mappings by mapping the first account ID to the set of account IDs of the consumer of the service each assigned by one of the more than one providers. In some embodiments the ID management function may generate a set of session IDs associated with both the consumer of the service and the set of account IDs. In some embodiments the ID management function may obtain according to the set of session IDs, information on a charging profile associated with the service, the information on the charging profile indicating a set of addresses each pointing to a storage storing the charging profile associated with the service and the set of session IDs. In some embodiments the ID management function may send to the DAM a response comprising one or more of: the set of account IDs, the set of session IDs, and the set of addresses.

In some embodiments the ID management may map the first account first account ID with a third account ID of the consumer of the service assigned by a third provider among the more than one providers. In some embodiments the ID management may generate the second session ID associated with both the consumer of the service and the third account ID. In some embodiments the ID management may send to the second function a traffic usage request requesting for information associated with the traffic usage of the consumer of the service. In some embodiments the traffic usage request may comprise the third account ID, wherein the second function is operated by the third provider among the more than one providers. In some embodiments, the traffic usage request may include the third account ID and the second session ID. In some embodiments, the ID management may receive from the second function a traffic usage response comprising the information associated with traffic usage of the consumer of the service. In some embodiments the ID management may send to the DAM a data collection response comprising the second session ID associated with the consumer of the service and the address of the storage storing the traffic usage of the consumer of the service.

In some embodiments, the DAM may at 924, generate the charging result. In some embodiments the DAM may generate the charging results according to the information associated with the consumer of service.

In some embodiments, the DAM may obtain according to the received one or more address, information comprising one or more of: the charging profile associated with the service and the traffic usage of the consumer of the service. The DAM may then generate the charging results according to the obtained information.

In some embodiments, the DAM may obtain according to the set of addresses, information including the charging profiles. In some embodiments, the DAM may obtain information associated with the traffic usage of the consumer of the service. In some embodiments the DAM may generate the charging result at least partially according to the obtained information. In some embodiments the charging results comprises received mappings. The DAM may then send the charging function the generated charging results.

In some embodiments, at 926, the charging function may receive form the DAM, the charging result indicating how to charge the service for the requester. In some embodiments, at 928, the charging function may charge the service for the requester according to the received charging result.

As described herein, embodiments provide for a multiple-provider charging architecture comprising a global charging management and DAM. The multiple-provider charging architecture may, via DAM, provide multiple-provider charging model for different providers. The multiple-provider charging architecture may improve security and privacy protection. Embodiments may further provide for performing charging calculations based on global UE ID. Embodiments may further provide for performing charging calculations without the use global UE ID (e.g., when UE has different IDs among different providers or within the same provider).

As may appreciated by a person skilled in the art, embodiments described herein may be used in internet of things (IoT) and internet of Vehicle (IoV) scenarios. Embodiments described herein may further be applied to applications such as satellite communication. In these scenarios, the destination identifier in a data packet may be referred to identifier of UE, or identifier of a terminal device (e.g., IoT devices, wearable devices, and vehicular devices (or vehicle-mounted devices, vehicle on-board equipment)).

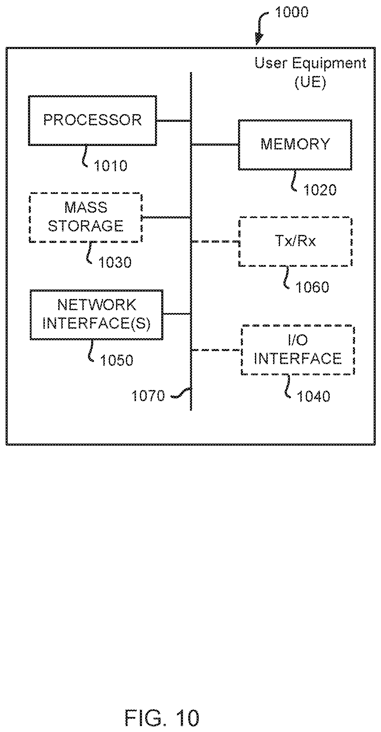

FIG. 10 is a schematic diagram of UE 1000 that may perform any or all of operations of the above methods and features explicitly or implicitly described herein, according to different embodiments of the present invention. For example, a computer equipped with network function may be configured as UE 1000.

As shown, the UE 1000 may include a processor 1010, such as a Central Processing Unit (CPU) or specialized processors such as a Graphics Processing Unit (GPU) or other such processor unit, memory 1020, non-transitory mass storage 1030, input-output interface 1040, network interface 1050, and a transceiver 1060, all of which are communicatively coupled via bi-directional bus 1070. According to certain embodiments, any or all of the depicted elements may be utilized, or only a subset of the elements. Further, UE 1000 may contain multiple instances of certain elements, such as multiple processors, memories, or transceivers. Also, elements of the hardware device may be directly coupled to other elements without the bi-directional bus. Additionally, or alternatively to a processor and memory, other electronics, such as integrated circuits, may be employed for performing the required logical operations.

The memory 1020 may include any type of non-transitory memory such as static random access memory (SRAM), dynamic random access memory (DRAM), synchronous DRAM (SDRAM), read-only memory (ROM), any combination of such, or the like. The mass storage element 1030 may include any type of non-transitory storage device, such as a solid state drive, hard disk drive, a magnetic disk drive, an optical disk drive, USB drive, or any computer program product configured to store data and machine executable program code. According to certain embodiments, the memory 1020 or mass storage 1030 may have recorded thereon statements and instructions executable by the processor 1010 for performing any of the aforementioned method operations described above.

Embodiments of the present invention can be implemented using electronics hardware, software, or a combination thereof. In some embodiments, the invention is implemented by one or multiple computer processors executing program instructions stored in memory. In some embodiments, the invention is implemented partially or fully in hardware, for example using one or more field programmable gate arrays (FPGAs) or application specific integrated circuits (ASICs) to rapidly perform processing operations.

It will be appreciated that, although specific embodiments of the technology have been described herein for purposes of illustration, various modifications may be made without departing from the scope of the technology. The specification and drawings are, accordingly, to be regarded simply as an illustration of the invention as defined by the appended claims, and are contemplated to cover any and all modifications, variations, combinations or equivalents that fall within the scope of the present invention. In particular, it is within the scope of the technology to provide a computer program product or program element, or a program storage or memory device such as a magnetic or optical wire, tape or disc, or the like, for storing signals readable by a machine, for controlling the operation of a computer according to the method of the technology and/or to structure some or all of its components in accordance with the system of the technology.

Acts associated with the method described herein can be implemented as coded instructions in a computer program product. In other words, the computer program product is a computer-readable medium upon which software code is recorded to execute the method when the computer program product is loaded into memory and executed on the microprocessor of the wireless communication device.

Further, each operation of the method may be executed on any computing device, such as a personal computer, server, PDA, or the like and pursuant to one or more, or a part of one or more, program elements, modules or objects generated from any programming language, such as C++, Java, or the like. In addition, each operation, or a file or object or the like implementing each said operation, may be executed by special purpose hardware or a circuit module designed for that purpose.

Through the descriptions of the preceding embodiments, the present invention may be implemented by using hardware only or by using software and a necessary universal hardware platform. Based on such understandings, the technical solution of the present invention may be embodied in the form of a software product. The software product may be stored in a non-volatile or non-transitory storage medium, which can be a compact disk read-only memory (CD-ROM), USB flash disk, or a removable hard disk. The software product includes a number of instructions that enable a computer device (personal computer, server, or network device) to execute the methods provided in the embodiments of the present invention. For example, such an execution may correspond to a simulation of the logical operations as described herein. The software product may additionally or alternatively include number of instructions that enable a computer device to execute operations for configuring or programming a digital logic apparatus in accordance with embodiments of the present invention.

Although the present invention has been described with reference to specific features and embodiments thereof, it is evident that various modifications and combinations can be made thereto without departing from the invention. The specification and drawings are, accordingly, to be regarded simply as an illustration of the invention as defined by the appended claims, and are contemplated to cover any and all modifications, variations, combinations or equivalents that fall within the scope of the present invention as it is depicted by the appended claims.

## Claims

1. A charging method, the method comprising:
receiving (806), by a charging function (102, 418) from a requester (208) on behalf of a provider, a charging request requesting for charging a service, wherein the service spans a plurality of network functions, NFs, operated by more than one provider including the provider which the requester (208) is on behalf of,
wherein the charging request comprises a first account ID identifying a consumer of the service, a charging requirement and a security requirement,
the charging requirement indicating one or more of: charging frequency, an ID of the service, a billing result, charging services or bill notification mode, and
the security requirement indicating a privacy protection associated with the service;
sending (808), by the charging function (102), an ID swapping request message to an ID management function (104), wherein the ID swapping request message includes the first account ID;
receiving (810), by the charging function (102), an ID swapping response comprising one or more mappings between the first account ID and one or more provider IDs, the one or more provider IDs identifying one or more providers among the more than one providers, the one or more providers deploying or controlling network function, NF, instances associated with the service;
sending (812), by the charging function (102, 418) to a data analysis management, DAM (106), a charging process request for a charging result, the charging process request comprising the first account ID and the one or more mappings;
receiving (824), by the charging function (102, 418) from the DAM (106), the charging result indicating how to charge the service for the requester (208); and
charging, by the charging function (102, 418), the service for the requester (208) according to the received charging result.

2. The method of claim 1, wherein the charging request is received by the charging function (102, 418) from the requester (208) via a trigger function (204) configured as an interface enabling communications between requesters (208) on behalf of the more than one providers and the charging function (102, 418

3. The method of claim 2, wherein the charging request is received by the charging function (102, 418) from the requester (208) via the trigger function (204) in the following way:
receiving, by the trigger function (204) from the requester (208), a second charging request;
configuring, by the trigger function (204), a multiple-provider charging model according to the charging requirement, wherein the multiple-provider charging model indicates how to charge the service across the one or more providers; and
sending, by the trigger function (204) to the charging function (102, 418), the charging request requesting for charging the service indicating the multiple-provider charging model.

4. The method of claim 3, wherein the trigger function (204) determines one or more charging events associated with the second charging request and the charging request sent by the triggering function to the charging function (102, 418) indicates the one or more charging events.

5. The method of any of claim 2 to 4, the charging request further comprising: a trigger indication indicating to establish a charging chain; wherein before the charging request is received by the charging function (102, 418) from the requester (208) via the trigger function (204), the method further comprises:
receiving, by the trigger function (204), the charging request;
sending, by the trigger function (204) to a chain management function configured to manage charging chains associated with services, a charging chain establishment request comprising one or more of: the ID of the service and the trigger indication; and
receiving, by the trigger function (204) from the chain management function, a response indicating a charging chain, the charging chain being associated with a charging group including one or more group members which are consumers of the service.

6. The method of claim 5, the charging request further comprising: IDs of group members in a charging group associated with the charging chain.

7. The method of claim 5 or 6, further comprising:
verifying, by the chain management function, the requester (208) according to the charging chain establishment request;
obtaining, by the chain management function, information on the charging group according to the charging chain establishment request; and
determining, by the chain management function, a charging chain for the requester (208) according to the established charging group.

8. The method of any of claims 3 to 7, further comprising:
configuring, by the charging function (102, 418) according the security requirement, a charging mode option indicating a charging process (800), wherein the charging process (800) request indicates the charging mode option.

9. The method of any of claims 1 to 8, further comprising:
requesting, by the DAM (106), for information associated with the consumer of the service; and
receiving, by the DAM (106), the information associated with the consumer of the service comprising one or more of: a charging profile associated with the service and traffic usage of the consumer of the service.

10. The method of claim 9, wherein the DAM (106) requesting for information associated with the consumer of the service comprises:
sending, by the DAM (106) to an ID management function (104, 107), a data collection request requesting for the information associated with the consumer of the service and comprising the first account ID;
wherein the method further comprises:
mapping, by the ID management function (104, 107), the first account ID with a second account ID of the consumer of the service assigned by a second provider among the more than one providers;
sending, by the ID management function (104, 107) to a first function, a charging profile request requesting for the charging profile associated with the service and comprising the second account ID, wherein the first function is operated by the second provider among the more than one providers;
receiving, by the ID management (104, 106) from the first function, a charging profile response indicating the charging profile; and
sending, by the ID management (104, 106) to the DAM (106), the charging profile.

11. The method of claim 10, further comprising:
mapping, by the ID management function (104, 107), the first account ID with a third account ID of the consumer of the service assigned by a third provider among the more than one providers;
sending, by the ID management function (104, 107) to a second function, a traffic usage request requesting for information associated with the traffic usage of the consumer of the service and comprising the third account ID, wherein the second function is operated by the third provider among the more than one providers; and
receiving, by the ID management (104, 106) from the second function, a traffic usage response comprising the information associated with traffic usage of the consumer of the service.

12. The method of any of claims 9 to 11, further comprising:
generating, by the DAM (106), the charging result according to the information associated with the consumer of the service; and
sending, by the DAM (106) to the charging function (102, 418), the generated charging result.

13. A communication system comprising:
at least one processor (1010); and
non-transient memory storing machine readable instructions which when executed by the least one processor (1010) configured for executing a method as claimed in any of claims 1-12.

14. A machine readable medium storing instructions which when executed by a processor (1010) configured for executing a method as claimed in any one of claims 1-12.

15. An apparatus comprising means for executing a method as claimed in any one of claims 1-12.

## Patentansprüche

1. Abrechnungsverfahren, wobei das Verfahren umfasst:
Empfangen (806) einer Abrechnungsanforderung, die eine Abrechnung eines Dienstes anfordert, durch eine Abrechnungsfunktion (102, 418) von einem Anforderer (208) im Namen eines Anbieters, wobei der Dienst eine Vielzahl von Netzwerkfunktionen, NFs, umfasst, die von mehr als einem Anbieter betrieben werden, einschließlich des Anbieters, in dessen Namen der Anforderer (208) handelt,
wobei die Abrechnungsanforderung eine erste Konto-ID, die einen Verbraucher des Dienstes identifiziert, eine Abrechnungsforderung und eine Sicherheitsforderung umfasst,
wobei die Abrechnungsforderung eines oder mehrere von Folgendem angibt: Abrechnungsfrequenz, eine ID des Dienstes, ein Rechnungsergebnis, Abrechnungsdienste oder Rechnungsbenachrichtigungsmodus und
wobei die Sicherheitsforderung einen Datenschutz angibt, der mit dem Dienst verbunden ist;
Senden (808) einer ID-Austauschanforderungs-Nachricht durch die Abrechnungsfunktion (102) an eine ID-Verwaltungsfunktion (104), wobei die ID-Austauschanforderungs-Nachricht die erste Konto-ID beinhaltet;
Empfangen (810) einer ID-Austauschantwort, die eine oder mehrere Zuordnungen zwischen der ersten Konto-ID und einer oder mehreren Anbieter-IDs umfasst, durch die Abrechnungsfunktion (102), wobei die eine oder mehreren Anbieter-IDs einen oder mehrere Anbieter unter den mehr als einem Anbietern identifizieren, wobei der eine oder die mehreren Anbieter Netzwerkfunktions-Instanzen, NF-Instanzen, bereitstellen oder steuern, die mit dem Dienst verbunden sind;
Senden (812) einer Anforderung eines Abrechnungsvorgangs für ein Abrechnungsergebnis durch die Abrechnungsfunktion (102, 418) an eine Datenanalyseverwaltung, DAM (106), wobei die Anforderung des Abrechnungsvorgangs die erste Konto-ID und die eine oder mehreren Zuordnungen umfasst;
Empfangen (824) des Abrechnungsergebnisses, das angibt, wie der Dienst für den Anforderer (208) abzurechnen ist, durch die Abrechnungsfunktion (102, 418) von der DAM (106); und
Abrechnen des Dienstes für den Anforderer (208) durch die Abrechnungsfunktion (102, 418) gemäß dem empfangenen Abrechnungsergebnis.

2. Verfahren nach Anspruch 1, wobei die Abrechnungsanforderung durch die Abrechnungsfunktion (102, 418) von dem Anforderer (208) über eine Auslösefunktion (204) empfangen wird, die als eine Schnittstelle konfiguriert ist, die Kommunikationen zwischen Anforderern (208) im Namen des mehr als einen Anbieters und der Abrechnungsfunktion (102, 418) ermöglicht.

3. Verfahren nach Anspruch 2, wobei die Abrechnungsanforderung durch die Abrechnungsfunktion (102, 418) von dem Anforderer (208) über die Auslösefunktion (204) auf folgende Weise empfangen wird:
Empfangen einer zweiten Abrechnungsanforderung durch die Auslösefunktion (204) von dem Anforderer (208);
Konfigurieren eines Mehrfachanbieter-Abrechnungsmodells gemäß der Abrechnungsforderung durch die Auslösefunktion (204), wobei das Mehrfachanbieter-Abrechnungsmodell angibt, wie der Dienst über den einen oder die mehreren Anbieter abzurechnen ist; und
Senden der Abrechnungsanforderung, die eine Abrechnung des Dienstes anfordert, die das Mehrfachanbieter-Abrechnungsmodell angibt, durch die Auslösefunktion (204) an die Abrechnungsfunktion (102, 418).

4. Verfahren nach Anspruch 3, wobei die Auslösefunktion (204) ein oder mehrere Abrechnungsereignisse bestimmt, die mit der zweiten Abrechnungsanforderung verbunden sind, und die Abrechnungsanforderung, die durch die Auslösefunktion an die Abrechnungsfunktion (102, 418) gesendet wird, das eine oder die mehreren Abrechnungsereignisse angibt.

5. Verfahren nach einem der Ansprüche 2 bis 4, wobei die Abrechnungsanforderung ferner umfasst: eine Auslöseangabe, die angibt, eine Abrechnungskette zu etablieren; wobei das Verfahren, bevor die Abrechnungsanforderung durch die Abrechnungsfunktion (102, 418) von dem Anforderer (208) über die Auslösefunktion (204) empfangen wird, ferner umfasst:
Empfangen der Abrechnungsanforderung durch die Auslösefunktion (204);
Senden einer Abrechnungsketten-Etablierungsanforderung, die eines oder mehrere von Folgendem umfasst: die ID des Dienstes und die Auslöseindikation, durch die Auslösefunktion (204) an eine Kettenverwaltungsfunktion, die konfiguriert ist, um Abrechnungsketten zu verwalten, die mit Diensten verbunden sind; und
Empfangen einer Antwort, die eine Abrechnungskette angibt, durch die Auslösefunktion (204) von der Kettenverwaltungsfunktion, wobei die Abrechnungskette mit einer Abrechnungsgruppe verbunden ist, die ein oder mehrere Gruppenmitglieder beinhaltet, die Verbraucher des Dienstes sind.

6. Verfahren nach Anspruch 5, wobei die Abrechnungsanforderung ferner umfasst: IDs von Gruppenmitgliedern in einer Abrechnungsgruppe, die mit der Abrechnungskette verbunden ist.

7. Verfahren nach Anspruch 5 oder 6, ferner umfassend:
Verifizieren des Anforderers (208) durch die Kettenverwaltungsfunktion gemäß der Abrechnungsketten-Etablierungsanforderung;
Erlangen von Informationen über die Abrechnungsgruppe durch die Kettenverwaltungsfunktion gemäß der Abrechnungsketten-Etablierungsanforderung; und
Bestimmen einer Abrechnungskette für den Anforderer (208) durch die Kettenverwaltungsfunktion gemäß der etablierten Abrechnungsgruppe.

8. Verfahren nach einem der Ansprüche 3 bis 7, ferner umfassend:
Konfigurieren einer Abrechnungsmodus-Option, die einen Abrechnungsvorgang (800) angibt, durch die Abrechnungsfunktion (102, 418) gemäß der Sicherheitsforderung, wobei die Anforderung des Abrechnungsvorgangs (800) die Abrechnungsmodus-Option angibt.

9. Verfahren nach einem der Ansprüche 1 bis 8, ferner umfassend:
Anfordern von Informationen, die mit dem Verbraucher des Dienstes verbunden sind, durch die DAM (106); und
Empfangen der Informationen, die mit dem Verbraucher des Dienstes verbunden sind, umfassend eines oder mehrere von Folgendem: ein Abrechnungsprofil, das mit dem Dienst verbunden ist, und Datenverkehrsnutzung des Verbrauchers des Dienstes, durch die DAM (106).

10. Verfahren nach Anspruch 9, wobei das Anfordern von Informationen, die mit dem Verbraucher des Dienstes verbunden sind, durch die DAM (106) umfasst:
Senden einer Datenerfassungsanforderung, die die Informationen anfordert, die mit dem Verbraucher des Dienstes verbunden sind, und die erste Konto-ID umfasst, durch die DAM (106) an eine ID-Verwaltungsfunktion (104, 107);
wobei das Verfahren ferner umfasst:
Zuordnen der ersten Konto-ID zu einer zweiten Konto-ID des Verbrauchers des Dienstes, die durch einen zweiten Anbieter unter den mehr als einem Anbietern zugewiesen wurde, durch die ID-Verwaltungsfunktion (104, 107);
Senden einer Abrechnungsprofil-Anforderung, die das Abrechnungsprofil anfordert, das mit dem Dienst verbunden ist, und die zweite Konto-ID umfasst, durch die ID-Verwaltungsfunktion (104, 107) an eine erste Funktion, wobei die erste Funktion durch den zweiten Anbieter unter den mehr als einem Anbietern betrieben wird;
Empfangen einer Abrechnungsprofil-Antwort, die das Abrechnungsprofil angibt, durch die ID-Verwaltung (104, 106) von der ersten Funktion; und
Senden des Abrechnungsprofils durch die ID-Verwaltung (104, 106) an die DAM (106).

11. Verfahren nach Anspruch 10, ferner umfassend:
Zuordnen der ersten Konto-ID zu einer dritten Konto-ID des Verbrauchers des Dienstes, die durch einen dritten Anbieter unter den mehr als einem Anbietern zugewiesen wurde, durch die ID-Verwaltungsfunktion (104, 107);
Senden einer Datenverkehrsnutzungsanforderung, die Informationen anfordert, die mit der Datenverkehrsnutzung des Verbrauchers des Dienstes verbunden sind, und die dritte Konto-ID umfasst, durch die ID-Verwaltungsfunktion (104, 107) an eine zweite Funktion, wobei die zweite Funktion durch den dritten Anbieter unter den mehr als einem Anbietern betrieben wird; und
Empfangen einer Datenverkehrsnutzungsantwort, die die Informationen umfasst, die mit der Datenverkehrsnutzung des Verbrauchers des Dienstes verbunden sind, durch die ID-Verwaltung (104, 106) von der zweiten Funktion.

12. Verfahren nach einem der Ansprüche 9 bis 11, ferner umfassend:
Erzeugen des Abrechnungsergebnisses gemäß den Informationen, die mit dem Verbraucher des Dienstes verbunden sind, durch die DAM (106); und
Senden des erzeugten Abrechnungsergebnisses durch die DAM (106) an die Abrechnungsfunktion (102, 418).

13. Kommunikationssystem, umfassend:
mindestens einen Prozessor (1010); und
nichtflüchtigen Speicher, der maschinenlesbare Anweisungen speichert, die, wenn sie durch den mindestens einen Prozessor (1010) ausgeführt werden, zum Ausführen eines Verfahrens nach einem der Ansprüche 1-12 konfiguriert sind.

14. Maschinenlesbares Medium, das Anweisungen speichert, die, wenn sie durch einen Prozessor (1010) ausgeführt werden, zum Ausführen eines Verfahrens nach einem der Ansprüche 1-12 konfiguriert sind.

15. Vorrichtung, umfassend Mittel zum Ausführen eines Verfahrens nach einem der Ansprüche 1-12.

## Revendications

1. Procédé de facturation, le procédé comprenant :
la réception (806), par une fonction de facturation (102, 418) d'un demandeur (208) au nom d'un fournisseur, d'une demande de facturation demandant la facturation d'un service, dans lequel le service couvre une pluralité de fonctions réseau, NF, exploitées par plus d'un fournisseur, y compris le fournisseur pour le compte duquel le demandeur (208) agit,
dans lequel la demande de facturation comprend un premier identifiant de compte identifiant un consommateur du service, une exigence de facturation et une exigence de sécurité,
l'exigence de facturation indiquant un ou plusieurs des éléments suivants : fréquence de facturation, identifiant du service, résultat de facturation, services de facturation ou mode de notification de facture, et
l'exigence de sécurité indiquant une protection de la vie privée associée au service ;
l'envoi (808), par la fonction de facturation (102), d'un message de demande d'échange d'identifiant à une fonction de gestion d'identifiants (104), dans lequel le message de demande d'échange d'identifiant comporte le premier identifiant de compte ;
la réception (810), par la fonction de facturation (102), d'une réponse d'échange d'identifiant comprenant un ou plusieurs mappages entre le premier identifiant de compte et un ou plusieurs identifiants de fournisseur, les un ou plusieurs identifiants de fournisseur identifiant un ou plusieurs fournisseurs parmi les plusieurs fournisseurs, les un ou plusieurs fournisseurs déployant ou commandant des instances de fonction réseau, NF, associées au service ;
l'envoi (812), par la fonction de facturation (102, 418) à une gestion d'analyse de données, DAM (106), d'une demande de processus de facturation pour un résultat de facturation, la demande de processus de facturation comprenant le premier identifiant de compte et les un ou plusieurs mappages ;
la réception (824), par la fonction de facturation (102, 418) de la DAM (106), du résultat de facturation indiquant comment facturer le service au demandeur (208) ; et
la facturation, par la fonction de facturation (102, 418), du service pour le demandeur (208) selon le résultat de facturation reçu.

2. Procédé selon la revendication 1, dans lequel la demande de facturation est reçue par la fonction de facturation (102, 418) du demandeur (208) via une fonction de déclenchement (204) configurée comme une interface permettant la communication entre les demandeurs (208) pour le compte de plusieurs fournisseurs et la fonction de facturation (102, 418).

3. Procédé selon la revendication 2, dans lequel la demande de facturation est reçue par la fonction de facturation (102, 418) du demandeur (208) via la fonction de déclenchement (204) de la manière suivante :
la réception, par la fonction de déclenchement (204) du demandeur (208), d'une seconde demande de facturation ;
la configuration, par la fonction de déclenchement (204), d'un modèle de facturation multi-fournisseurs selon l'exigence de facturation, dans lequel le modèle de facturation multi-fournisseurs indique comment facturer le service à un ou plusieurs fournisseurs ; et
l'envoi, par la fonction de déclenchement (204) à la fonction de facturation (102, 418), de la demande de facturation demandant la facturation du service indiquant le modèle de facturation multi-fournisseurs.

4. Procédé selon la revendication 3, dans lequel la fonction de déclenchement (204) détermine un ou plusieurs événements de facturation associés à la seconde demande de facturation et la demande de facturation envoyée par la fonction de déclenchement à la fonction de facturation (102, 418) indique les un ou plusieurs événements de facturation.

5. Procédé selon l'une quelconque des revendications 2 à 4, la demande de facturation comprenant également : une indication de déclenchement indiquant d'établir une chaîne de facturation ; dans lequel avant que la demande de facturation ne soit reçue par la fonction de facturation (102, 418) du demandeur (208) via la fonction de déclenchement (204), le procédé comprend également :
la réception, par la fonction de déclenchement (204), de la demande de facturation ;
l'envoi, par la fonction de déclenchement (204) à une fonction de gestion de chaîne configurée pour gérer les chaînes de facturation associées aux services, d'une demande d'établissement de chaîne de facturation comprenant un ou plusieurs des éléments suivants : l'identifiant du service et l'indication de déclenchement ; et
la réception, par la fonction de déclenchement (204) de la fonction de gestion de chaîne, d'une réponse indiquant une chaîne de facturation, la chaîne de facturation étant associée à un groupe de facturation comportant un ou plusieurs membres du groupe qui sont des consommateurs du service.

6. Procédé selon la revendication 5, la demande de facturation comprenant également : des identifiants de membres de groupe dans un groupe de facturation associé à la chaîne de facturation.

7. Procédé selon la revendication 5 ou 6, comprenant également :
la vérification, par la fonction de gestion de chaîne, du demandeur (208) selon la demande d'établissement de la chaîne de facturation ;
l'obtention, par la fonction de gestion de la chaîne, d'informations sur le groupe de facturation selon la demande d'établissement de la chaîne de facturation ; et
la détermination, par la fonction de gestion de chaîne, d'une chaîne de facturation pour le demandeur (208) selon le groupe de facturation établi.

8. Procédé selon l'une quelconque des revendication 3 à 7, comprenant également :
la configuration, par la fonction de facturation (102, 418) selon l'exigence de sécurité, d'une option de mode de facturation indiquant un processus de facturation (800), dans lequel la demande de processus de facturation (800) indique l'option de mode de facturation.

9. Procédé selon l'une quelconque des revendications 1 à 8, comprenant également :
la demande, par la DAM (106), d'informations associées au consommateur du service ; et
la réception, par la DAM (106), des informations associées au consommateur du service comprenant un ou plusieurs des éléments suivants : un profil de facturation associé au service et l'utilisation du trafic du consommateur du service.

10. Procédé selon la revendication 9 dans lequel la DAM (106) demandant des informations associées au consommateur du service comprend :
l'envoi, par la DAM (106) à une fonction de gestion d'identifiants (104, 107), d'une demande de collecte de données demandant les informations associées au consommateur du service et comprenant le premier identifiant de compte ;
dans lequel le procédé comprend également :
le mappage, par la fonction de gestion d'identifiants (104, 107), du premier identifiant de compte avec un deuxième identifiant de compte du consommateur du service attribué par un deuxième fournisseur parmi les plusieurs fournisseurs ;
l'envoi, par la fonction de gestion d'identifiants (104, 107) à une première fonction, d'une demande de profil de facturation demandant le profil de facturation associé au service et comprenant le deuxième identifiant de compte, dans lequel la première fonction est exploitée par le deuxième fournisseur parmi les plusieurs fournisseurs ;
la réception, par la gestion d'identifiants (104, 106) de la première fonction, d'une réponse de profil de facturation indiquant le profil de facturation ; et
l'envoi, par la gestion d'identifiants (104, 106) à la DAM (106), du profil de facturation.

11. Procédé selon la revendication 10, comprenant également :
le mappage, par la fonction de gestion d'identifiants (104, 107), du premier identifiant de compte avec un troisième de compte du consommateur du service attribué par un troisième fournisseur parmi les plusieurs fournisseurs ;
l'envoi, par la fonction de gestion d'identifiants (104, 107) à une seconde fonction, d'une demande d'utilisation du trafic demandant des informations associées à l'utilisation du trafic du consommateur du service et comprenant le troisième identifiant de compte, dans lequel la seconde fonction est exploitée par le troisième fournisseur parmi les plusieurs fournisseurs ; et
la réception, par la gestion d'identifiants (104, 106) de la seconde fonction, d'une réponse d'utilisation du trafic comprenant les informations associées à l'utilisation du trafic du consommateur du service.

12. Procédé selon l'une quelconque des revendications 9 à 11, comprenant également :
la génération, par la DAM (106), du résultat de facturation selon les informations associées au consommateur du service ; et
l'envoi, par la DAM (106) à la fonction de facturation (102, 418), du résultat de facturation généré.

13. Système de communication comprenant :
au moins un processeur (1010) ; et
une mémoire non transitoire stockant des instructions lisibles par machine qui, lorsqu'elles sont exécutées par l'au moins un processeur (1010) configuré pour exécuter un procédé tel que revendiqué selon l'une quelconque des revendications 1 à 12.

14. Support lisible par machine stockant des instructions qui, lorsqu'elles sont exécutées par un processeur (1010) configuré pour exécuter un procédé tel que revendiqué selon l'une quelconque des revendications 1 à 12.

15. Appareil comprenant des moyens pour exécuter un procédé tel que revendiqué selon l'une quelconque des revendications 1 à 12.
